# EUROPEAN PATENT APPLICATION

(11) **EP 4 589 291 A1**
(43) Date of publication of application: **23.07.2025**
(21) Application number: 25151711.6
(22) Date of filing: 14.01.2025
(51) Int. Cl.: G01N 29/14, G01N 29/24, G01N 29/36, G01N 29/44

(54) **TRANSMISSION TERMINAL, MEASUREMENT SYSTEM, AND CONTROL METHOD**

(30) Priority: 16.01.2024 JP 2024004881
(71) Applicant: KABUSHIKI KAISHA TOSHIBA, Minato-ku Tokyo 105-0023 (JP)
(72) Inventor: Ueda, Yuki, Minato-ku, Tokyo (JP); Usui, Takashi, Minato-ku, Tokyo (JP); Takamine, Hidefumi, Minato-ku, Tokyo (JP)
(74) Representative: Hoffmann Eitle

(57) **Abstract**

According to one embodiment, a measurement system, and a control method capable of improving transmission efficiency of data needed to evaluate a structure. A transmission terminal according to an embodiment includes a receiver, a communicator, and a signal processor. The receiver receives elastic waves output from a sensor configured to detect the elastic waves generated inside a structure. The communicator wirelessly transmits transmission data saved in a transmission buffer memory configured to save transmission data based on the received elastic waves. The signal processor controls elastic wave measurement processing on the basis of the number of items of data saved in the transmission buffer memory and an elapse time from a clock time at which the elastic waves have been detected.

## Description

### FIELD

Embodiments described herein relate generally to a transmission terminal, a measurement system, and a control method.

### BACKGROUND

If a load due to transportation is imparted on a structure such as a bridge, acoustic emission (AE) occurs due to progress of cracking inside the structure, friction, and the like. It is possible to detect elastic waves generated inside the structure by installing a sensor on a surface (for example, a lower surface of the structure) that is different from a surface on which the load is imparted. In the related art, elastic waves generated with passing of vehicles are detected by a sensor installed on a lower surface of a structure, and soundness of the structure is evaluated on the basis of densities of generation sources of the plurality of detected elastic waves. However, acquisition of measurement data through wired connection has been mainstream until now, and wireless acquisition of measurement data has been studied in recent years.

The number of elastic waves generated with passing of vehicles may be equal to or greater than several hundreds depending on soundness of the structure. A wireless transmission speed is limited depending on a frequency band of a wireless communication standard to be used, the number of sensors to be used for measurement, and the like. Therefore, it may not be possible to transmit all items of data detected by the sensors. Although there is no need to transmit all items of data, it is desired that data needed to evaluate the structure be able to be efficiently transmitted.

### BRIEF DESCRIPTION OF THE DRAWINGS

FIG. 1 is a diagram illustrating a system configuration of a measurement system according to a first embodiment.
FIG. 2 is a diagram illustrating a functional configuration example of a transmission terminal according to the first embodiment.
FIG. 3 is a diagram showing a method of measuring elastic waves according to the first embodiment.
FIG. 4 is a diagram showing an overview of a control method related to AE measurement according to the first embodiment.
FIG. 5 is a flowchart illustrating a flow (part 1) of elastic wave detection processing performed by the transmission terminal according to the first embodiment.
FIG. 6 is a flowchart illustrating a flow of data transmission processing performed by the transmission terminal according to the first embodiment.
FIG. 7 is a flowchart illustrating a flow of processing related to FlagX that a signal processor has according to the first embodiment.
FIG. 8 is a flowchart illustrating a flow of processing related to FlagY that the signal processor has according to the first embodiment.
FIG. 9 is a flowchart illustrating a flow of processing performed by the signal processor according to the first embodiment.
FIG. 10 is a flowchart illustrating a flow of processing performed by the signal processor according to the first embodiment.
FIG. 11 is a flowchart illustrating a flow (part 2) of the elastic wave detection processing performed by the transmission terminal according to the first embodiment.
FIG. 12 is a flowchart illustrating a flow of processing to recognize an event group occurring during a stop that is performed by the transmission terminal according to the first embodiment.
FIG. 13 is a diagram showing an overview of a control method related to AE measurement according to a first modification example of the first embodiment.
FIG. 14 is a diagram showing an overview of the control method related to the AE measurement according to the first modification example of the first embodiment.
FIG. 15 is a diagram illustrating a system configuration of a measurement system according to a second embodiment.
FIG. 16 is a diagram showing an overview of a control method related to AE measurement according to the second embodiment.
FIG. 17 is a diagram showing an overview of the control method related to the AE measurement according to the second embodiment.
FIG. 18 is a flowchart illustrating a flow of processing related to FlagX that a signal processor has according to the second embodiment.
FIG. 19 is a flowchart illustrating a flow of the processing related to FlagX that the signal processor has according to the second embodiment.
FIG. 20 is a flowchart illustrating a flow of processing related to FlagY that the signal processor has according to the second embodiment.
FIG. 21 is a diagram illustrating a system configuration of a measurement system according to a third embodiment.
FIG. 22 is a diagram illustrating another system configuration of the measurement system according to the third embodiment.
FIG. 23 is a diagram showing an overview of a control method related to AE measurement according to the third embodiment.

### DETAILED DESCRIPTION

The present invention provides a problem to be solved by the present invention is to provide a transmission terminal, a measurement system, and a control method capable of improving transmission efficiency of data needed to evaluate a structure.

According to one embodiment, a transmission terminal according to an embodiment includes a receiver, a communicator, and a signal processor. The receiver receives elastic waves output from a sensor configured to detect the elastic waves generated inside a structure. The communicator wirelessly transmits transmission data saved in a transmission buffer memory configured to save transmission data based on the received elastic waves. The signal processor controls elastic wave measurement processing on the basis of the number of items of data saved in the transmission buffer memory and an elapse time from a clock time at which the elastic waves have been detected.

Hereinafter, a transmission terminal, a measurement system, and a control method according to embodiments will be described with reference to the drawings.

### (First embodiment)

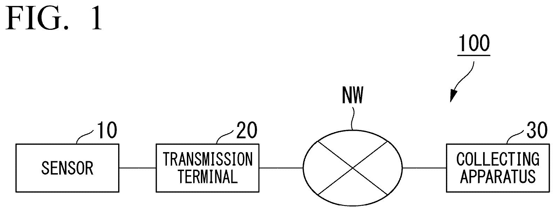

FIG. 1 is a diagram illustrating a system configuration of a measurement system 100 according to a first embodiment. The measurement system 100 includes a sensor 10, a transmission terminal 20, and a collecting apparatus 30. The sensor 10 and the transmission terminal 20 are connected in a wired manner. The transmission terminal 20 and the collecting apparatus 30 are wirelessly connected via a network NW. The network NW is, for example, a 920 MHz band or Bluetooth (registered trademark). The wireless connection between the transmission terminal 20 and the collecting apparatus 30 is not necessarily limited and may any communication scheme as long as it is possible to establish communication in a wireless manner. Although FIG. 1 illustrates a configuration in which the measurement system 100 includes one sensor 10 and one transmission terminal 20, the measurement system 100 may include a plurality of sensors 10 and a plurality of transmission terminals 20.

The sensor 10 is a sensor that detects a physical amount. The sensor 10 is, for example, an AE sensor, an acceleration sensor, a microphone, a temperature sensor, or the like. The sensor 10 may be another sensor as long as it is possible to detect a physical amount with the sensor. The sensor 10 converts the detected physical amount into an electrical signal. The sensor 10 transmits the electrical signal to the transmission terminal 20.

As an example, an exemplary case in which the sensor 10 is installed in a structure, such as a bridge, through which vehicles and the like pass will be described. The structure may be any structure in which elastic waves are generated with occurrence or development of cracking or external impact (such as rain or artificial rain, for example). Note that the bridge is not limited to a structure bridging a river, a valley, or the like and also includes various structures (for example, an overpass of a highway) provided above a ground surface. The structure may be any plate-shaped member. The sensor 10 is installed on a surface of a structure (for example, a lower surface) that is different from a surface on which vehicles travel, for example.

The transmission terminal 20 transmits transmission data including clock time information to the collecting apparatus 30. For example, the transmission terminal 20 detects an event on the basis of the electrical signal output from the sensor 10 and transmits transmission data including a clock time at which the detected event has occurred (hereinafter, referred to as an "event detection clock time") to the collecting apparatus 30. Here, the event represents a matter that has occurred outside or inside the device. In the following embodiment, an example in which the event is a matter that has occurred outside the device (for example, a matter based on a detection result of the sensor) will be described. Hereinafter, the sensor 10 and the transmission terminal 20 may be configured as one device, and the one device will be referred to as a sensor terminal.

The collecting apparatus 30 collects the transmission data transmitted from the transmission terminal 20.

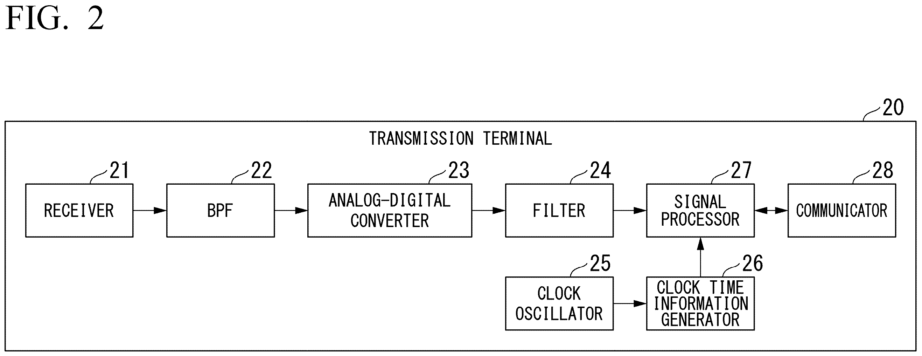

FIG. 2 is a diagram illustrating a functional configuration example of the transmission terminal 20 according to the first embodiment. The transmission terminal 20 includes a receiver 21, a BPF 22, an analog-digital converter 23, a filter 24, a clock oscillator 25, a clock time information generator 26, a signal processor 27, and a communicator 28.

The receiver 21 receives the electrical signal transmitted from the sensor 10. The receiver 21 outputs the received electrical signal to the BPF 22.

The BPF 22 is a bandpass filter that removes noise from the electrical signal received by the receiver 21 and extracts only a necessary band. The BPF 22 outputs the signal after the noise removal to the analog-digital converter 23. The BPF 22 is an analog filter.

The analog-digital converter 23 performs conversion from an analog signal to a digital signal by quantizing the signal after the noise removal output from the BPF 22. The analog-digital converter 23 outputs the digital signal to the filter 24.

The filter 24 removes noise or extracts only a necessary band from the digital signal output from the analog-digital converter 23. The filter 24 outputs the signal after the noise removal to the signal processor 27. The filter 24 is a digital filter.

In the following description, processing performed by the BPF 22, the analog-digital converter 23, and the filter 24 will be described as pre-processing.

The clock oscillator 25 generates a clock signal. Specifically, the clock oscillator 25 determines a time width of one second in the transmission terminal 20. The clock oscillator 25 is configured using crystal oscillators of a voltage variable type, such as a voltage controlled xtal oscillators (VCXO), for example. The clock oscillator 25 outputs the clock signal to the clock time information generator 26.

The clock time information generator 26 determines a clock time in the transmission terminal 20 in accordance with the clock signal output from the clock oscillator 25. The clock time information generator 26 is, for example, a counter including a register. In other words, the clock time information generator 26 counts edges of the clock signal and stores a cumulative count value from a time when a power of the transmission terminal 20 is turned on as clock time information in the register.

The signal processor 27 determines an event detection clock time and a transmission clock time on the basis of the digital signal after the noise removal output from the filter 24 and the clock time information generated by the clock time information generator 26. The signal processor 27 may determine, as the event detection clock time, a clock time indicated by the clock time information generated by the clock time information generator 26 at a timing at which the digital signal after the noise removal output from the filter 24 is input, for example. The signal processor 27 may determine, as the transmission clock time, a clock time indicated by the clock time information generated by the clock time information generator 26 at a timing at which the communicator 28 is caused to transmit the transmission data, for example. The event detection clock time may be, for example, the clock frequency or may be an expression representing what time, what minute, and what second. Furthermore, the signal processor 27 extracts feature amounts of the digital signal after the noise removal. The feature amounts are information indicating features of the signal. For example, the feature amounts include an amplitude [mV] of the waveform, a rising time [usec] of the waveform, a duration time [usec] of a gate signal, a zero cross count number [times], an energy [arb.] of the waveform, a frequency [Hz], and the like.

The amplitude of the waveform is a value of the maximum amplitude in the noise removed signal, for example. The rising time of the waveform is a time T1 until the noise removed signal reaches the maximum value after the start of rising of the gate signal, for example. The duration time of the gate signal is a time until the amplitude becomes smaller than a preset value after the start of rising of the gate signal, for example. The zero cross count number is the number of times the noise removed signal crosses over a reference line passing through a zero value, for example.

The energy of the waveform is a value obtained by time-integrating a square of the amplitude of the noise removed signal at each time point, for example. Note that the definition of energy is not limited to that in the above example and may be a value approximated using an envelope of the waveform, for example. The frequency is a frequency of the noise removed signal.

Furthermore, the signal processor 27 includes a transmission buffer memory (first in first out: FIFO). The transmission buffer memory is a temporary recording medium to save transmission data transmitted by the communicator 28. The transmission buffer memory is, for example, a dual-port random access memory (RAM). The signal processor 27 temporarily saves parameters related to the extracted feature amounts in association with the event detection clock time and a sensor ID as transmission data in the transmission buffer memory. The sensor ID is identification information to identify the sensor 10 installed in a region as a target of evaluation of soundness of the structure (hereinafter, referred to as an "evaluation region").

Furthermore, the signal processor 27 controls a timing at which the communicator 28 is caused to transmit the transmission data. Therefore, the signal processor 27 includes at least two flags therein. The at least two flags are FlagX and FlagY. Each of FlagX and FlagY is represented by a value "0" or "1". Note that the signal processor 27 also has flags other than FlagX and FlagY, FlagX and FlagY will be described here as an example. Other flags will be described when corresponding flags are to be mentioned.

FlagX is a flag indicating whether or not execution of a measurement operation related to AE measurement, saving in the transmission buffer memory, or transmission of the transmission data has been permitted. The value "0" of FlagX means that the execution of the measurement operation has been permitted. The value "1" of FlagX means that the execution of the measurement operation has not been permitted, that is, the measurement operation is to be stopped. Hereinafter, transmission of the transmission data will be described as an example of the measurement operation. FlagY is a flag indicating whether or not the transmission buffer is empty (the amount of saving in the memory is zero). The value "0" of FlagY means that the transmission buffer memory is empty. The value "1" of FlagY means that the transmission buffer memory is not empty.

Furthermore, the signal processor 27 determines whether or not a processing condition has been satisfied on the basis of FlagX and FlagY described above. The processing condition is a condition for the signal processor 27 to perform processing of elastic waves detected by the sensor 10 and for example, a case where the value of FlagX is "0" and the value of FlagY is "0". In other words, the signal processor 27 determines that the processing condition has been satisfied in a case where transmission has been permitted and the transmission buffer memory is empty. On the other hand, the signal processor 27 determines that the processing condition has not been satisfied in a case where transmission has not been permitted or the transmission buffer memory is not empty.

The communicator 28 is a communication interface that performs communication with the collecting apparatus 30 via the network NW. The communicator 28 transmits transmission data saved in the transmission buffer memory to the collecting apparatus 30 in order through wireless communication by the FIFO scheme in a case where the transmission data is saved in the transmission buffer memory of the signal processor 27.

The frequency band for the wireless communication used as communication of the communicator 28 is, for example, a band of 2.4 GHz, 920 MHz, or the like. The communicator 28 can transmit the transmission data at an appropriate timing, for example, the communicator 28 can collectively transmit the transmission data at a timing different from the output timing from the signal processor 27 using the storage or can individually transmit the transmission data.

Next, hardware of the transmission terminal 20 will be described. Power of the transmission terminal 20 is supplied from an external power source, a primary cell, a secondary cell, a solar battery, an energy harvester, or the like. The transmission terminal 20 is implemented by an analog circuit and a digital circuit. The digital circuit is implemented by a field programmable gate array (FPGA) or a microcomputer, for example. The digital circuit may be implemented by a dedicated large-scale integration (LSI). Also, the transmission terminal 20 may include a nonvolatile memory such as a flash memory or a detachable memory mounted therein.

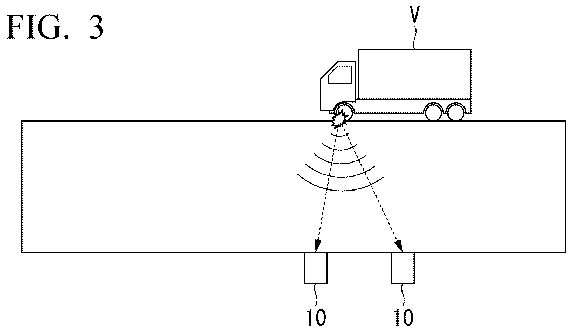

FIG. 3 is a diagram for explaining a method of measuring elastic waves according to the first embodiment. In FIG. 3, evaluating internal damage in a structure on the basis of elastic waves generated by a traveling portion (tires, for example) of a vehicle V traveling on a road surface will be considered as an example of the method of measuring elastic waves. If the vehicle V passes on the road surface, a large number of elastic waves are generated in the structure due to an interaction between the tires and the road surface, warpage due to a load, and the like. The generated elastic waves propagate inside the structure and is detected by each sensor 10 installed on a surface (for example, a bottom surface) that is different from the road surface. It is possible to measure the elastic waves by installing each sensor 10 on the surface (for example, the bottom surface) that is different from the road surface in this manner. It is possible to estimate the detected amounts of elastic waves and the positions of generation sources of the elastic waves by using data obtained from each sensor 10 and to diagnose soundness of the structure on the basis of a degree of concentration, a distribution density, and the like.

A series of AE hits (elastic wave group) are generated every time the vehicle V passes. It is necessary for the transmission terminal 20 to wirelessly transmit a plurality of items of elastic wave data, which is a series of AE hits generated due to the passing of the vehicle V However, in a case where vehicles V passes one after another, there is a high probability that the next vehicle V passes before the wireless transmission of the transmission terminal 20 is completed. Also, in a case where the number of passing vehicles V is large, there is also a probability that a problem of overflow of the memory in the transmission terminal 20 may occur. The soundness of the structure may exhibit different results depending on a measurement time and the like and is thus required to be normalized by the traffic amount of the vehicles. Therefore, it is possible to solve this problem by determining whether or not the measurement can be performed in units of vehicles. Hereinafter, a specific configuration to solve this problem will be described.

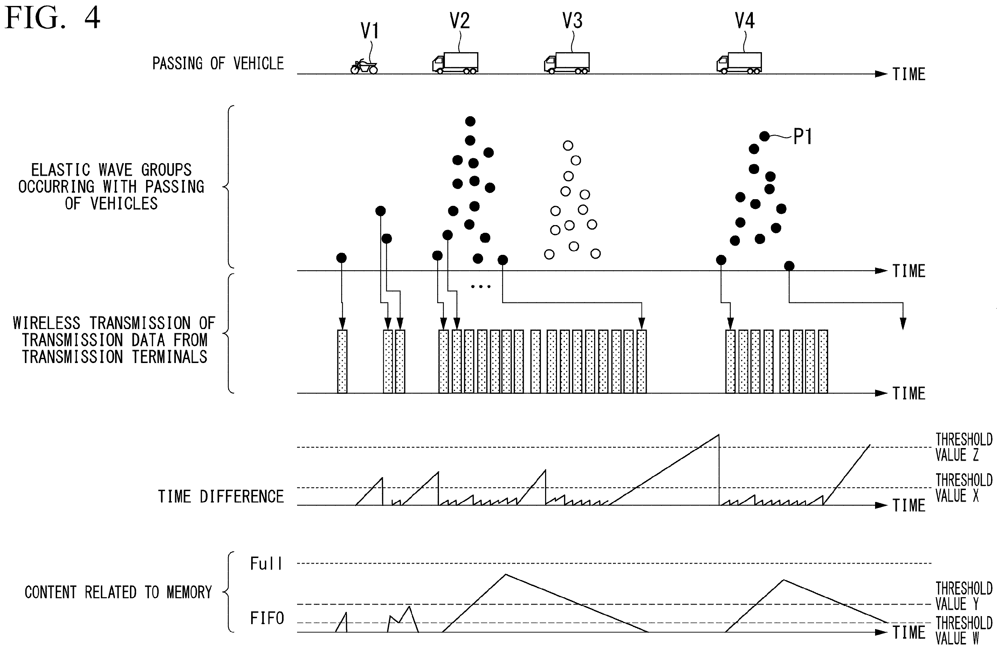

FIG. 4 is a diagram for explaining an overview of the control method related to the AE measurement according to the first embodiment. FIG. 4 illustrates a configuration in which four vehicle V1, V2, V3, and V4 pass. When the vehicles V1, V2, V3, and V4 pass, elastic waves (the point P1 in FIG. 4) are generated as illustrated in FIG. 4. The transmission terminal 20 acquires an electrical signal based on the generated elastic waves from the sensor 10, performs necessary signal processing on the elastic waves, and wirelessly transmits the elastic waves to the collecting apparatus 30. The transmission terminal 20 detects the elastic wave group in real time. The elastic wave group is a collective name of the plurality of elastic waves generated in a short period of time. As a method of detecting the elastic wave group, a time point at which a time difference between the current clock time and the last AE hit clock time (the detection clock time of the elastic waves) becomes equal to or greater than a specific period of time is adopted here.

The transmission terminal 20 performs the AE measurement when the elastic wave group arrives and starts wireless transmission while temporarily saving the data related to the elastic waves in the transmission buffer memory. The transmission terminal 20 generates a stop signal as needed after detection of one elastic wave group is ended, and stops the AE measurement. The detection of the elastic wave group means that the elastic waves have simply been detected by the sensor 10 without performing processing such as feature amount extraction. The stop signal is a signal to perform any of stopping of the AE measurement, stopping of the saving in the transmission buffer memory, and stopping of the transmission of the transmission data. The timing at which the stop signal is generated is determined on the basis of a time difference between the current clock time and the last AE hit and the memory count. For example, the timing at which the stop signal is generated is a timing at which the time difference between the current clock time and the last AE hit becomes equal to or greater than a threshold value X and the memory count becomes equal to or greater than a threshold value Y Hereinafter, a state where any of the stopping of the AE measurement, the stopping of the saving in the transmission buffer memory, and the stopping of the transmission of the transmission data is being performed will be referred to as a stopped state. Therefore, the transmission terminal 20 is brought into the stopped state on the basis of the stop signal.

The threshold value X may be determined on the basis of an inter-vehicle distance and a vehicle speed. The threshold value Y is equal to or greater than one. This is a value in accordance with erroneous detection due to noise occurring once. For example, the stop occurs even in a case where a small amount of AE hit that can be wirelessly transmitted in a short period of time such as an animal, a motorcycle, or an article coming with wind occurs. Thus, it is possible to provide a specific memory count threshold value and prevent the stop in a case of the small amount of AE hit. The threshold value X is an aspect of a first threshold value, while the threshold value Y is an aspect of a second threshold value.

In a case where transmission data remains in the transmission buffer memory even when a next elastic wave group occurs after detection of an elastic wave group is ended, the transmission terminal 20 does not measure the elastic wave group. Then, the transmission terminal 20 continues to transmit the transmission data saved in the transmission buffer memory. Thereafter, the transmission terminal 20 generates a release signal as needed and starts the AE measurement again on the basis of the generated release signal. For example, the release signal is generated by a signal generator included inside the signal processor 27 and is received by a functional unit that is included inside the signal processor 27 and performs signal processing. Here, the functional unit that performs signal processing is a functional unit that performs feature amount extraction or the like.

The release signal is a signal to perform any of a start of the AE measurement, a start of saving in the transmission buffer memory, and a start of transmission of the transmission data. The timing at which the release signal is generated is determined on the basis of a time difference between the current clock time and the last AE hit and the memory count. For example, the timing at which the release signal is generated is a timing at which the time difference between the current clock time and the last AE hit becomes equal to or greater than a threshold value Z and the memory count becomes less than a threshold value W. The threshold value Z is determined on the basis of intervals, speeds, and the like of vehicles passing through the structure in order to fully exclude the elastic wave group that is occurring when the measurement is stopped. The threshold value W may be zero meaning that the entire wireless transmission has been completed, for example. The threshold value W is not limited to the number depending on the number of hits of the elastic wave group. Hereinafter, a state where any of the start of the AE measurement, the start of the saving in the transmission buffer memory, and the start of the transmission of the transmission data is being performed will be referred to as a released state. Therefore, the transmission terminal 20 is brought into the released state on the basis of the release signal. The threshold value Z is an aspect of a third threshold value, while the threshold value W is an aspect of a fourth threshold value.

In the example illustrated in FIG. 4, the transmission terminal 20 measures an elastic wave group generated with subsequent passing of the vehicle V2 (hereinafter, referred to as a "second elastic wave group") since the condition of generating the stop signal has not been satisfied after transmission of an elastic wave group generated with passing of the vehicle V1 (hereinafter, referred to as a "first elastic wave group") is completed. As illustrated in FIG. 4, the amount of data of the second elastic wave group is significantly large, and the transmission has not been completed at the timing at which a third elastic wave group is detected. In this case, the transmission terminal 20 does not perform measurement for the third elastic wave group and continues to transmit data regarding the second elastic wave group. In this manner, the condition of generating the stop signal has been satisfied at the timing at which the transmission terminal 20 detects the elastic wave group generated with passing of the vehicle V3 (hereinafter, referred to as a "third elastic wave group"). Therefore, the transmission terminal 20 does not perform measurement of the third elastic wave group.

Thereafter, a condition of generating the release signal has been satisfied at the timing at which the transmission terminal 20 completes the transmission of the data regarding the second elastic wave group and the transmission terminal 20 detects an elastic wave group generated with passing of the vehicle V4 (hereinafter, referred to as a "fourth elastic wave group"). Therefore, the transmission terminal 20 starts the measurement of the fourth elastic wave group again. It is possible to perform measurement of one elastic wave group with passing of one vehicle V and to perform normalization per passing of one vehicle when soundness of the structure is evaluated, by performing such control.

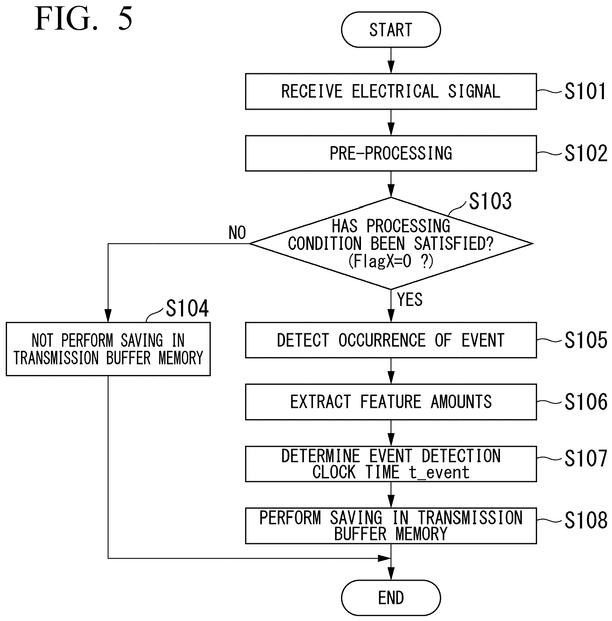

FIG. 5 is a flowchart illustrating a flow (Part 1) of elastic wave detection processing performed by the transmission terminal 20 according to the first embodiment. The processing in FIG. 5 is triggered by the sensor 10 detecting elastic waves and outputting the elastic waves to the transmission terminal 20. The transmission terminal 20 executes the processing in FIG. 5 every time the sensor 10 detects elastic waves.

The receiver 21 receives an electrical signal transmitted from the sensor 10 (Step S101). The receiver 21 outputs the received electrical signal to the BPF 22. The BPF 22, the analog-digital converter 23, and the filter 24 performs pre-processing on the electrical signal output from the receiver 21 (Step S102). The filter 24 outputs the electrical signal after the pre-processing to the signal processor 27. Once the electrical signal after the pre-processing is input, the signal processor 27 determines whether or not a processing condition has been satisfied (Step S103). The signal processor 27 determines whether or not the value of FlagX is "0", for example. As will be described later, the condition for the value of FlagX to become "0" is that the value of FlagY becomes "0". In other words, in a case where the value of FlagX is "0", the value of FlagY is also "0". Therefore, it is only necessary for the signal processor 27 to determine whether or not the processing condition has been satisfied by checking whether or not the value of FlagX is "0".

In a case where the signal processor 27 determines that the processing condition has not been satisfied (Step S103-NO), the signal processor 27 does not save the electrical signal after the pre-processing output from the filter 24 in the transmission buffer memory (Step S104). This is a state where the transmission terminal 20 is stopping the AE measurement with the aforementioned stop signal. On the other hand, in a case where the signal processor 27 determines that the processing condition has been satisfied (Step S103-YES), the signal processor 27 detects occurrence of an event on the basis of the electrical signal after the pre-processing output from the filter 24 (Step S105). The event represents an elastic wave generating matter occurring in the structure. The elastic wave generating matter in the present embodiment is passing of a vehicle on a road surface. The case where the processing condition has been satisfied is a state where the transmission terminal 20 has started the AE measurement with the aforementioned release signal.

The signal processor 27 extracts feature amounts using the electrical signal after the pre-processing output from the filter 24 (Step S106). A method of extracting the feature amounts is similar to an existing method. Furthermore, the signal processor 27 determines an event detection clock time tₑᵥₑₙₜ on the basis of the electrical signal after the pre-processing output from the filter 24 and clock time information output from the clock time information generator 26 (Step S107). The signal processor 27 causes the transmission buffer memory to temporarily save parameters related to the extracted feature amounts, the determined event detection clock time tₑᵥₑₙₜ, and the sensor ID in an associated manner as transmission data (Step S108).

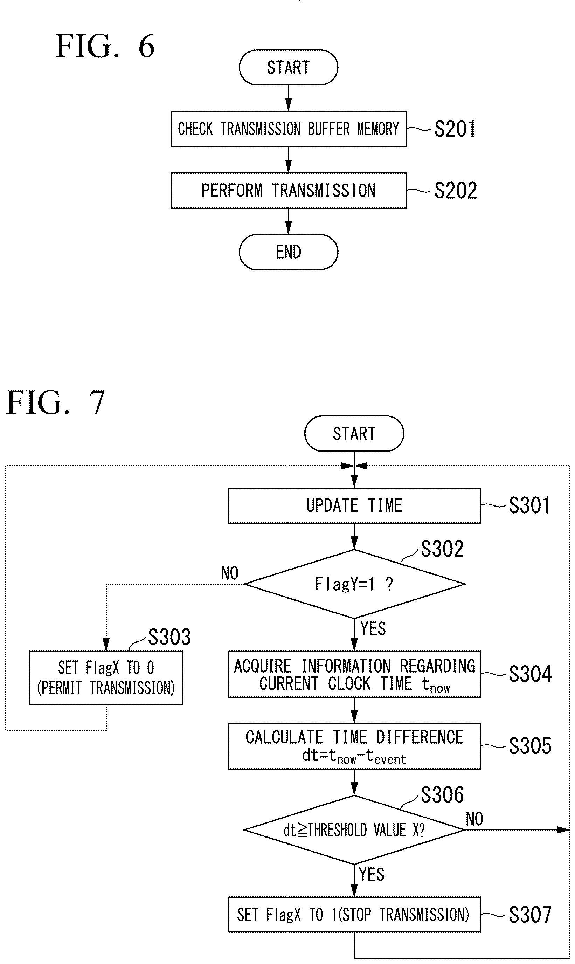

FIG. 6 is a flowchart illustrating a flow of data transmission processing performed by the transmission terminal 20 according to the first embodiment. The processing in FIG. 6 is triggered by the transmission data being saved in the transmission buffer memory that the signal processor 27 has.

The communicator 28 checks the transmission buffer memory that the signal processor 27 has and reads the transmission data in order from the oldest one by the FIFO scheme (Step S201). The communicator 28 transmits the read transmission data to the collecting apparatus 30 through wireless communication (Step S202).

FIG. 7 is a flowchart illustrating a flow of processing related to FlagX that the signal processor 27 has according to the first embodiment. The processing in Fig. 7 is executed every time a clock is input by the FPGA or the like constituting the transmission terminal 20.

Once a clock is input, the signal processor 27 updates the current time (Step S301). Thereafter, the signal processor 27 determines whether or not the value of FlagY is "1" (Step S302). In a case where the signal processor 27 determines that the value of FlagY is not "1" (Step S302-NO), the signal processor 27 sets the value of FlagX to "0" (Step S303). Thereafter, the processing in Step S301 is executed.

On the other hand, in a case where the signal processor 27 determines that the value of FlagY is "1" (Step S302-YES), the signal processor 27 acquires information regarding a current clock time t_{now} (Step S304). For example, the signal processor 27 acquires the clock time indicated by the clock time information generated by the clock time information generator 26 as the current clock time t_{now} at the timing at which the clock is input. The signal processor 27 calculates a time difference dt between the event detection clock time tₑᵥₑₙₜ that has finally occurred and the current clock time t_{now} (Step S305). The signal processor 27 determines whether or not the calculated time difference dt is greater than the threshold value X (Step S306).

In a case where the signal processor 27 determines that the calculated time difference dt is not greater than the threshold value X (Step S306-NO), the signal processor 27 repeatedly executes the processing in and after Step S301. In the case where the time difference dt is not greater than the threshold value X, there is a high probability that elastic waves generated due to passing of the save vehicle have been detected. In this manner, it is possible to acquire the elastic waves generated by passing of the same vehicle as a group of data.

In a case where the signal processor 27 determines that the calculated time difference dt is greater than the threshold value X (Step S306-YES), the signal processor 27 sets the value of FlagX to "1" (Step S307). In this manner, the signal processor 27 generates the stop signal and moves on to the stopped state on the basis of the generated stop signal. Thereafter, the processing in Step S301 is executed.

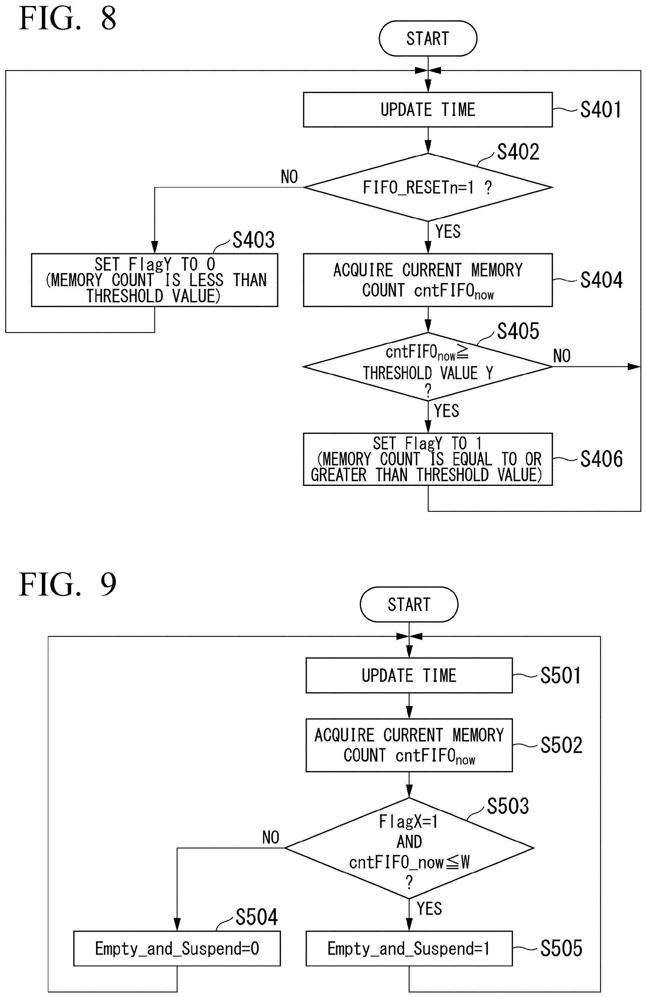

FIG. 8 is a flowchart illustrating a flow of processing related to FlagY that the signal processor 27 has according to the first embodiment. The processing in FIG. 8 is executed every time a clock is input by the FPGA or the like constituting the transmission terminal 20.

Once the clock is input, the signal processor 27 updates the current time (Step S401). Thereafter, the signal processor 27 determines whether or not a value of FIFO-RESETn is "1" (Step S402). FIFO_RESETn is a flag indicating whether or not the release signal has been received. The value "1" of FIFO_RESETn means that the release signal has not been received. The value "0" of FIFO RESETn means that the release signal has been received. In a case where the release signal is generated and is received by the functional unit that performs signal processing, the signal processor 27 sets the value of FIFO RESETn to "0". In a case where the release signal is not generated any more, the signal processor 27 sets the value of FIFO RESETn to "1".

In a case where the signal processor 27 determines that the value of FIFO_RESETn is not "1" (FIFO_RESETn = 0) (Step S402-NO), the signal processor 27 sets the value of FlagY to "0" (Step S403). Furthermore, since the value of FlagY has become "0", the signal processor 27 executes the processing in Step S303 in FIG. 7. In other words, the signal processor 27 sets the value of FlagX to "0". In this manner, the measurement operation is restarted (for example, the processing illustrated in FIGS. 5 and 6). Thereafter, the processing in Step S401 is executed. On the other hand, in a case where the signal processor 27 determines that the value of FIFO RESETn is "1" (Step S402-YES), the signal processor 27 acquires information regarding the number of current transmission buffer memories cntFIFO_{now} (Step S404). For example, the signal processor 27 refers to the transmission buffer memory and acquires the number of items of transmission data remaining in the transmission buffer memory as the number of current transmission buffer memories cntFIFO_{now}. The signal processor 27 determines whether or not the number of current transmission buffer memories cntFIFO_{now} is equal to or greater than the threshold value Y (Step S405).

In a case where the signal processor 27 determines that the number of current transmission buffer memories cntFIFO_{now} is equal to or greater than the threshold value Y (Step S405-YES), the signal processor 27 sets the value of FlagY to "1" (Step S406). Since the value of FlagY has become "1", the signal processor 27 executes the processing in and after Step S304 in FIG. 7. Furthermore, the signal processor 27 executes the processing in Step S401. On the other hand, in a case where the signal processor 27 determines that the number of current transmission buffer memories cntFIFO_{now} is less than the threshold value Y (Step S405-NO), the signal processor 27 repeatedly executes the processing in and after Step S401.

FIG. 9 is a flowchart illustrating a flow of processing performed by the signal processor 27 according to the first embodiment. The processing in FIG. 9 is processing of generating a state where transmission is stopped and the transmission buffer memory is empty. The processing in FIG. 9 is executed every time a clock is input by the FPGA or the like constituting the transmission terminal 20.

Once the clock is input, the signal processor 27 updates the current time (Step S501). Thereafter, the signal processor 27 acquires information regarding the number of current transmission buffer memories cntFIFO_{now} (Step S502). The signal processor 27 determines whether or not the value of FlagX is "1" and the number of current transmission buffer memories cntFIFO_{now} is equal to or less than the threshold value W (Step S503). In a case where the signal processor 27 determines that the value of FlagX is "1" and the number of current transmission buffer memories cntFIFO_{now} is not equal to or less than the threshold value W (Step S503-NO), the signal processor 27 sets the value of Empty _and_Suspend to "0" (Step S504). Thereafter, the processing in Step S501 is executed. Empty_and_Suspend is a flag indicating whether or not the measurement operation is being stopped (for example, FlagX = 1) and the number of current transmission buffer memories is equal to or less than a specific number.

On the other hand, in a case where the signal processor 27 determines that the value of FlagX is "1" and the number of current transmission buffer memories cntFIFOnow is equal to or less than the threshold value W (Step S503-YES), the signal processor 27 sets the value of Empty _and_Suspend to "1" (Step S505). Thereafter, the processing in Step S501 is executed.

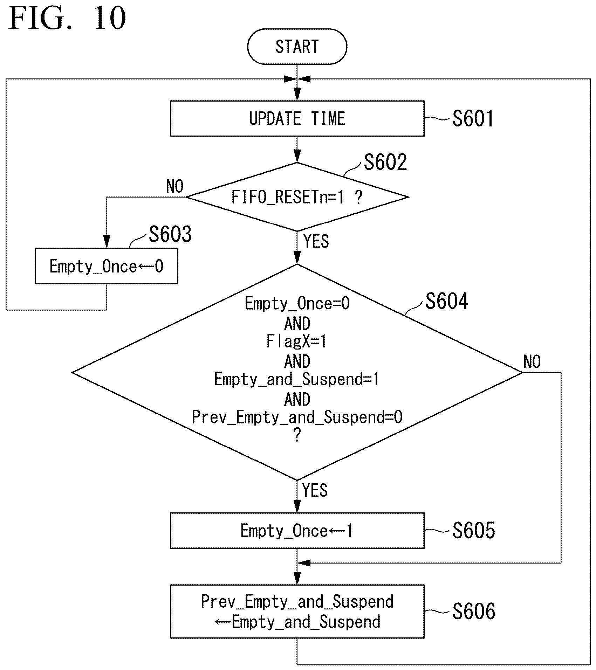

FIG. 10 is a flowchart illustrating a flow of processing performed by the signal processor 27 according to the first embodiment. The processing in FIG. 10 is processing that embodies the processing illustrated in FIG. 8. The processing in FIG. 10 is executed every time a clock is input by the FPGA or the like constituting the transmission terminal 20.

Once the clock is input, the signal processor 27 updates the current time (Step S601). Thereafter, the signal processor 27 determines whether or not the value of FIFO_RESETn is "1" (Step S602). In a case where the signal processor 27 determines that the value of FIFO RESETn is not "1" (Step S602-NO), the signal processor 27 sets the value of Empty_Once to "0" (Step S603). Empty _Once is a flag to cause the release signal to operate only once. Thereafter, the processing in Step S601 is executed. Empty _Once is a flag to constantly prevent FIFO RESETn from becoming zero when a signal satisfying the release signal is received. For example, Empty _Once is used to prevent resetting or the like from occurring when the transmission buffer memory is used by a signal different from one for an event.

On the other hand, in a case where the signal processor 27 determines that the value of FIFO RESETn is "1" (Step S602-YES), the signal processor 27 determines whether or not the value of Empty_Once is "0", the value of FlagX is "1", the value of Empty _and_Suspend is "1", and the value of Prev Empty_and_Suspend is "0" (Step S604). In a case where the signal processor 27 determines that the value of Empty _Once is "0", the value of FlagX is "1", the value of Empty _and_Suspend is "1", and the value of Prev_Empty_and_Suspend is "0" (Step S604-YES), the signal processor 27 sets the value of Empty_Once to "1" (Step S605). Prev_Empty_and_Suspend is a flag to cause Empty _Once to be updated with a delay to react only once as a pulse in the updating of the time.

Thereafter, the signal processor 27 updates the value of Prev_Empty_and_Suspend with the value of Empty_and_Suspend (Step S606). Thereafter, the processing in Step S601 is executed. In a case where the signal processor 27 determines that the value of Empty_Once is "0", the value of FlagX is "1", the value of Empty_and_Suspend is "1", and the value of Prev Empty_and_Suspend is not "0" in the processing in Step S604 (Step S604-NO), the signal processor 27 updates the value of PrevEmpty_and_Suspend with the value of Empty _and_Suspend (Step S606). For example, the signal processor 27 overwrites the value of Prev_Empty_and_Suspend with the value of Empty_and_Suspend. Thereafter, the processing in Step S601 is executed. The thus created signal is used to generate FIFO_RESETn as represented by Expression 1. FIFO RESETn <- (NOT Empty _and _Suspend) OR (NOT Empty _Once)...Expression 1

In Expression 1, FIFO RESETn becomes zero, and the release signal is generated in a case where the value of Empty _and _Suspend is "1" and the value of Empty_Once is "1".

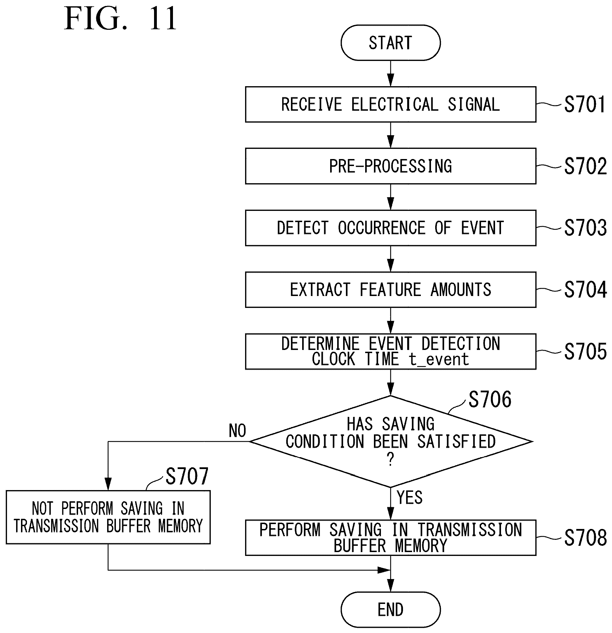

In the case of the flowchart illustrated in FIG. 5, it is assumed that event extraction that is the next processing may be started anytime after an event group is detected and transmission is ended. Thus, processing to solve the problem illustrated in FIG. 5 will be described using FIG. 11. FIG. 11 is a flowchart illustrating a flow (Part 2) of elastic wave detection processing performed by the transmission terminal 20 according to the first embodiment. The processing in FIG. 11 is triggered by the sensor 10 detecting elastic waves and outputting the elastic waves to the transmission terminal 20. The transmission terminal 20 may execute the processing in FIG. 11 instead of that in FIG. 5 every time the sensor 10 detects elastic waves.

The receiver 21 receives an electrical signal transmitted from the sensor 10 (Step S701). The receiver 21 outputs the received electrical signal to the BPF 22. The BPF 22, the analog-digital converter 23, and the filter 24 perform pre-processing on the electrical signal output from the receiver 21 (Step S702). The filter 24 outputs the electrical signal after the pre-processing to the signal processor 27. The signal processor 27 detects occurrence of an event on the basis of the electrical signal after the pre-processing output from the filter 24 (Step S703). The signal processor 27 extracts feature amounts using the electrical signal after the pre-processing output from the filter 24 (Step S704). Furthermore, the signal processor 27 determines an event detection clock time tₑᵥₑₙₜ on the basis of the electrical signal after the pre-processing output from the filter 24 and clock time information output from the clock time information generator 26 (Step S705).

Thereafter, the signal processor 27 determines whether or not a saving condition has been satisfied (Step S706). The saving condition is a condition to save the extracted feature amounts and the like as transmission data in the transmission buffer memory and is that FlagX = 0 is satisfied. In a case where the signal processor 27 determines that the saving condition has not been satisfied (Step S706-NO), the signal processor 27 does not save the electrical signal after the pre-processing output from the filter 24 in the transmission buffer memory (Step S707). In other words, the signal processor 27 discards the electrical signal after the pre-processing output from the filter 24 as not being a transmission target. On the other hand, in a case where the signal processor 27 determines that the saving condition has been satisfied (Step S706-YES), the signal processor 27 causes the transmission buffer memory to temporarily save parameters related to the extracted feature amounts, the determined event detection clock time tₑᵥₑₙₜ, and the sensor ID in an associated manner as transmission data (Step S708).

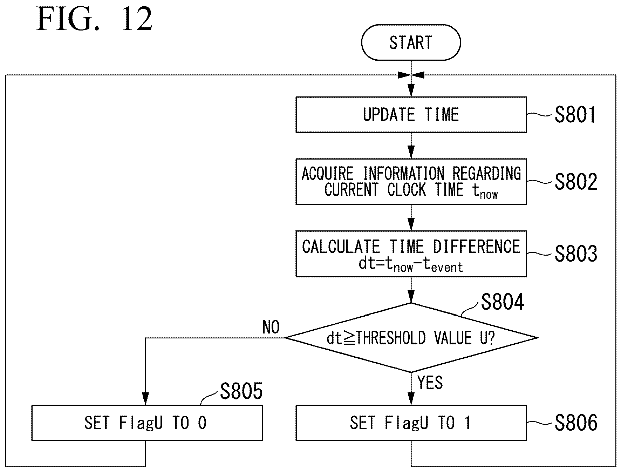

FIG. 12 is a flowchart illustrating a flow of processing to recognize an event group occurring during stopping that is performed by the transmission terminal 20 according to the first embodiment. The processing in FIG. 12 is triggered by the sensor 10 detecting elastic waves and outputting the elastic waves to the transmission terminal 20. The transmission terminal 20 executes the processing in FIG. 12 every time the sensor 10 detects elastic waves.

Once a clock is input, the signal processor 27 updates the current time (Step S801). Thereafter, the signal processor 27 acquires information regarding the current clock time t_{now} (Step S802). For example, the signal processor 27 acquires the clock time indicated by the clock time information generated by the clock time information generator 26 as the current clock time t_{now} at the timing at which the clock is input. The signal processor 27 calculates a time difference dt between an event detection clock time tₑᵥₑₙₜ that has finally occurred and the current clock time t_{now} (Step S803). The signal processor 27 determines whether or not the calculated time difference dt is greater than a threshold value U (Step S804). The threshold value U is an aspect of an eighth threshold value.

In a case where the signal processor 27 determines that the calculated time difference dt is not greater than the threshold value U (Step S804-NO), the signal processor 27 sets the value of FlagU to "0" (Step S805). FlagU is a flag used to generate the release signal. Thereafter, the signal processor 27 repeatedly executes the processing in and after Step S801. In a case where the signal processor 27 determines that the calculated time difference dt is greater than the threshold value U (Step S804-YES), the signal processor 27 sets the value of FlagU to "1" (Step S806). Thereafter, the processing in Step S801 is executed. The thus created FlagU is added to generate FIFO_RESETn as represented by Expression 2. In this manner, when FlagU = 1, FIFO_RESETn becomes zero depending on other conditions, and the release signal is generated. FIFO RESETn <- (NOT Empty _and _Suspend) OR (NOT Empty_Once) OR Expression 2

In Expression 2, FIFO RESETn becomes zero, and the release signal is generated in a case where the value of Empty _and_Suspend is "1", the value of Empty_Once is "1", and the value of FlagU is "1".

According to the measurement system 100 configured as described above, the transmission terminal 20 includes the receiver 21 that receives elastic waves output from the sensor 10 configured to detect elastic waves generated inside a structure, the communicator 28 that wirelessly transmits transmission data saved in the transmission buffer memory configured to save transmission data based on the received elastic waves, and the signal processor 27 that controls the elastic wave measurement processing on the basis of the number of items of data saved in the transmission buffer memory and the elapse time from the clock time at which elastic waves have been finally detected. It is thus possible to control the AE measurement in consideration of the number of items of data saved in the transmission buffer memory and the elapse time from the clock time at which the elastic waves have been finally detected. The elapse time from the clock time at which the elastic waves have been finally detected is an elapse time from the clock time at which elastic waves generated by one vehicle passing have been finally detected. Therefore, the AE measurement is controlled by taking how much transmission data based on the elastic waves generated by one vehicle passing remains in the transmission buffer memory into consideration. Therefore, it is possible to prevent a situation in which the transmission buffer memory causes overflow and cannot transmit the transmission data. It is thus possible to improve transmission efficiency of data needed to evaluate the structure.

The transmission terminal 20 controls any of elastic wave measurement, transmission by the communicator 28, and saving in transmission data in the transmission buffer memory. In this manner, it is possible to perform control such as stopping the transmission of the transmission data or the saving in the transmission data in the transmission buffer memory while performing measurement of elastic waves. Therefore, it is also possible to perform control in a case where it is desired to measure elastic waves and to stop the transmission of the transmission data. It is thus possible to improve convenience.

In a case where the elapse time that is the time difference dt between the event detection clock time tₑᵥₑₙₜ that has finally occurred and the current clock time t_{now} is greater than the threshold value X and the number of items of data saved in the transmission buffer memory is equal to or greater than the threshold value Y, the transmission terminal 20 stops the elastic wave measurement or the saving in the transmission data in the transmission buffer memory and causes the communicator 28 to perform transmission. In this manner, it is possible to transmit transmission data while curbing an increase in saving capacity in the transmission buffer memory in accordance with the elastic waves generated by a new vehicle passing. Therefore, it is possible to improve transmission efficiency of data needed to evaluate the structure.

In a case where the elapse time that is the time difference dt between the event detection clock time tₑᵥₑₙₜ that has finally occurred and the current clock time t_{now} is greater than the threshold value Z and the number of items of data saved in the transmission buffer memory is less than the threshold value W, the transmission terminal 20 releases the stopping of the elastic wave measurement or the saving in the transmission data in the transmission buffer memory. In this manner, it is possible to start measurement of elastic waves generated by a new vehicle passing.

### (First modification example)

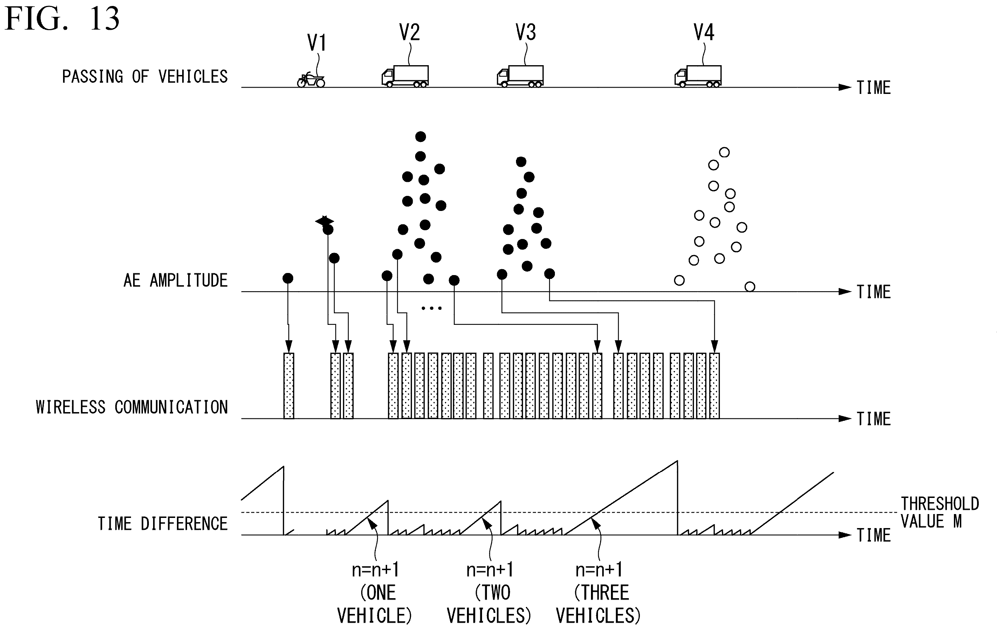

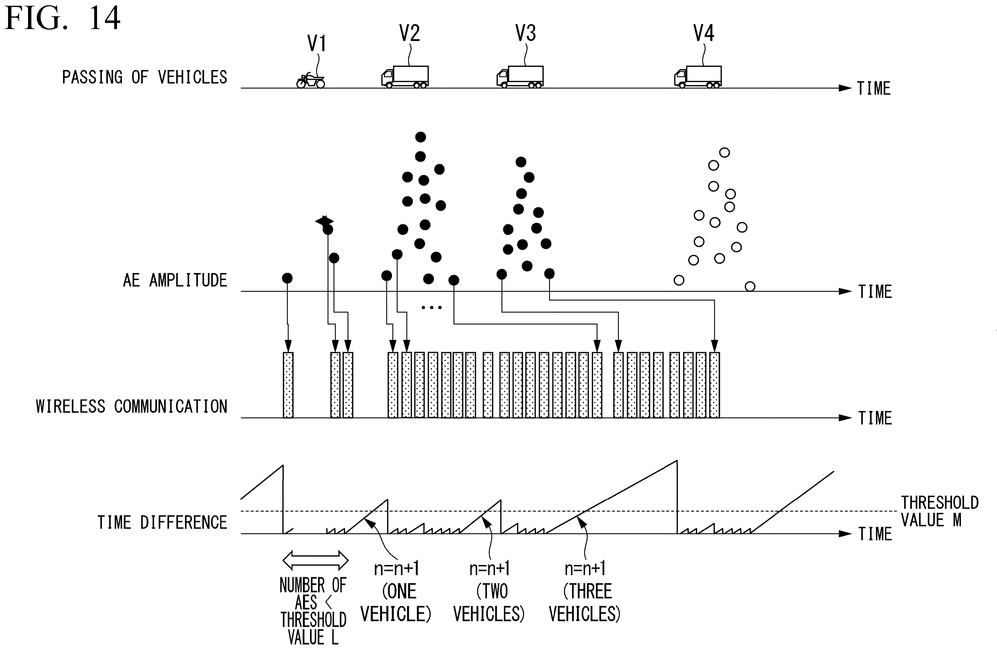

A case where efficiency is further improved when a plurality of transmission buffer memories are managed without being divided into each memory is also conceivable depending on the number of transmission buffer memories. Thus, the transmission terminal 20 may be configured to set the number N of vehicles to be counted (threshold value N) and stop the counting when the vehicle count number n becomes equal to or greater than the threshold value (N ≤ n). Processing performed in this case will be described using FIGS. 13 and 14. FIGS. 13 and 14 are diagrams for explaining an overview of a control method related to AE measurement according to a first modification example of the first embodiment. The signal processor 27 acquires information regarding the current clock time t_{now} and calculates the time difference dt between the finally occurring event detection clock time tₑᵥₑₙₜ and the current clock time t_{now}. The signal processor 27 sets the vehicle count number n = n + 1 in a case where the time difference dt exceeds a threshold value M as illustrated in FIG. 13. Note that in a case where the threshold value M is continuously exceeded, the signal processor 27 regards this as being caused by the same vehicle and sets the vehicle count number as n = n. Also, the signal processor 27 does not count the number of vehicles in a case where the number of elastic waves (number of AEs) per vehicle is less than a threshold value L as illustrated in FIG. 14. In other words, in a case where the number of elastic waves occurring in a period during which the time difference dt exceeds the threshold value M is less than the threshold value L, the signal processor 27 does not count this as one vehicle. This is for excluding noise and the like. The transmission terminal 20 sets the vehicle count number n to zero every time the release signal is received. The threshold value M is an aspect of the fifth threshold value. The threshold value L is an aspect of the sixth threshold value.

### (Second modification example)

Instead of the threshold value N described in the first modification example, division may be made using a vehicle group (consecutive vehicles). A case where efficiency is rather improved by performing management in units of a plurality of vehicles without separating them one by one is also conceivable depending on the number of memories of the transmission buffer memories. Thus, although the threshold value X is a threshold value to be compared with the clock time difference to recognize one vehicle as described above, a threshold value X' > the threshold value X may be designated to enhance efficiency in a case where the vehicles are located at close positions or by recognizing the vehicles as a vehicle group. In such a case, the threshold value X' is determined by the vehicle speeds and the allowable maximum inter-vehicle distance (that is desired to be adopted for division). The signal processor 27 performs the counting until the time difference dt exceeds the threshold value X' . In other words, the signal processor 27 measures elastic waves generated by passing of a plurality of vehicles until the time difference dt exceeds the threshold value X'. The threshold value X' is an aspect of the seventh threshold value.

### (Second embodiment)

In the first embodiment, the case where the number of transmission terminals is one has been described as an example. Although it is possible to efficiently measure an elastic wave group caused by a vehicle V by the control described in the first embodiment, it is necessary to measure the same vehicle V with a plurality of transmission terminals in evaluation of soundness. Thus, a control method of AE measurement in a case where a plurality of transmission terminals are included will be described in a second embodiment.

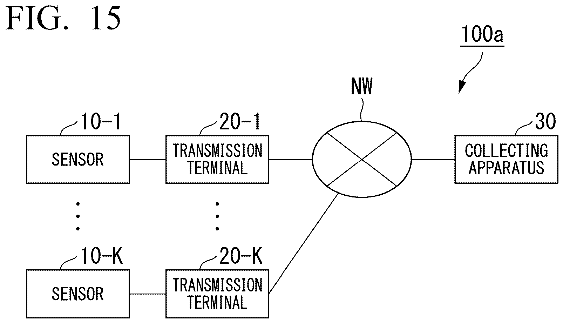

FIG. 15 is a diagram illustrating a system configuration of a measurement system 100a according to the second embodiment. The measurement system 100a includes K (K is an integer that is equal to or greater than two) sensors 10, K transmission terminals 20, and a collecting apparatus 30. The K sensors 10 and the K transmission terminals 20 are connected in a wired manner. For example, wired connection is established between a sensor 10-1 and a transmission terminal 20-1 and between a sensor 10-K and a transmission terminal 20-K. The K transmission terminals 20 and the collecting apparatus 30 are wirelessly connected via a network NW. The wireless connection between the K transmission terminals 20 and the collecting apparatus 30 is not necessarily limited and may be based on any communication scheme as long as it is possible to perform wireless communication.

Configurations included in each transmission terminal 20 are similar to the configurations described in the first embodiment. The transmission terminal 20 according to the second embodiment is different from that in the first embodiment in a part of processing performed by a signal processor 27. In addition, a part of processing performed by the collecting apparatus 30 according to the second embodiment is also different from that of the collecting apparatus 30 according to the first embodiment. Hereinafter, differences from the first embodiment will be mainly described.

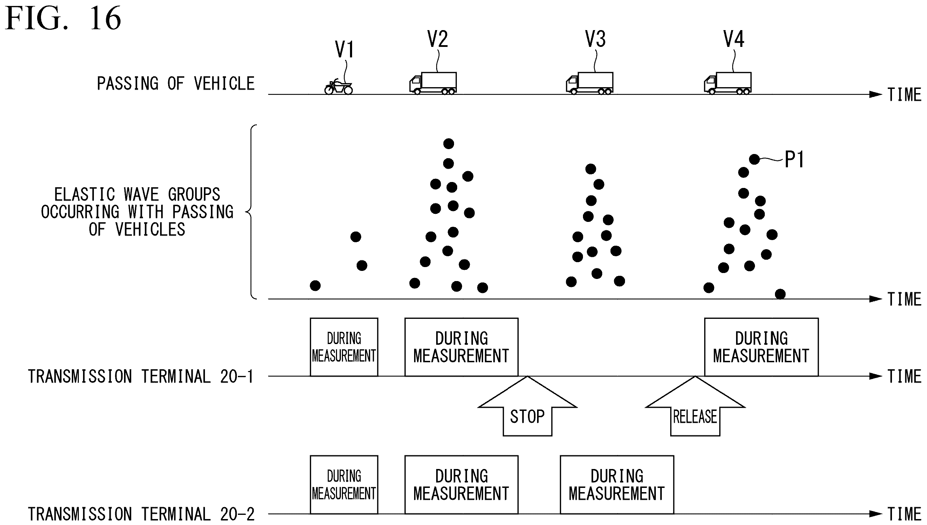

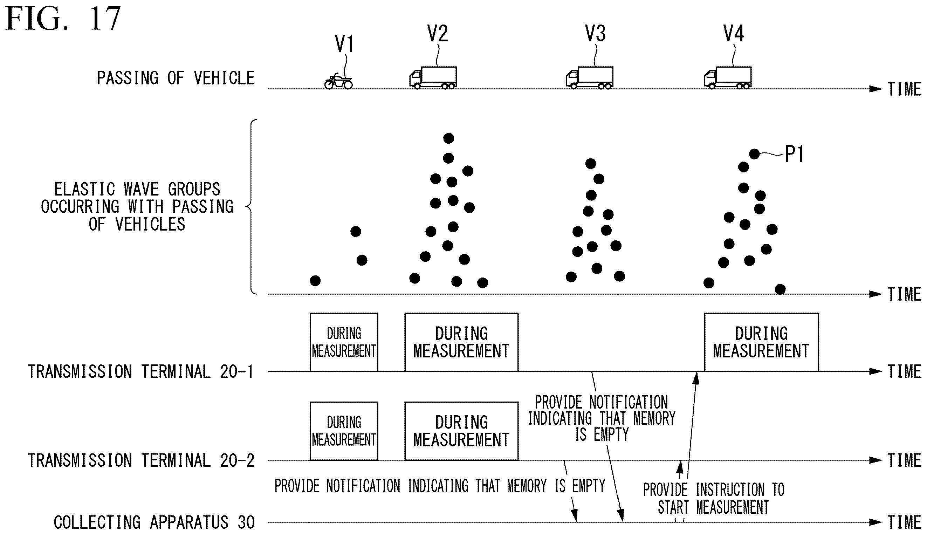

An overview of the control method related to AE measurement according to the second embodiment will be described using FIGS. 16 and 17. FIGS. 16 and 17 are diagrams for explaining the overview of the control method related to AE measurement according to the second embodiment. FIG. 16 illustrates a state where the plurality of sensors 10 are installed in a structure and the transmission terminals 20-1 and 20-2 connected to the sensors 10 are performing AE measurement. The transmission terminals 20-1 and 20-2 detect elastic waves generated by passing of each of vehicles V1, V2, V3, and V4, and the generated elastic waves differ for each transmission terminal 20 since the elastic waves change depending on the positions in the structure where the sensors 10 are disposed. Therefore, an event detection clock time, the number of hits, and the like may differ for each transmission terminal 20.

It is assumed that the transmission terminals 20-1 and 20-2 have measured a second elastic wave after measuring a first elastic wave group as illustrated in FIG. 16. Here, it is assumed that the transmission terminal 20-1 has taken time to perform transmission since the measured second elastic wave group includes more elastic waves while the transmission terminal 20-2 has immediately completed the transmission since the measured second elastic wave group includes fewer elastic waves. In this case, the transmission terminal 20-1 does not measure a third elastic wave group, and the transmission terminal 20-2 measures the third elastic wave group. In such a case, the measurement performed by the transmission terminal 20-1 and the measurement performed by the transmission terminal 20-2 may deviate.

Thus, the transmission terminals 20-1 and 20-2 generate memory empty signals indicating that transmission buffer memories are empty at a timing at which the transmission buffer memories become empty, and transmits the generated memory empty signals to the collecting apparatus 30 as illustrated in FIG. 17. The collecting apparatus 30 transmits a synchronization signal to each transmission terminal 20 in a case where the memory empty signals have been able to be received from all the necessary transmission terminals 20. Here, the necessary transmission terminals 20 represent transmission terminals 20 for which it is desired to synchronize the measurement start timing, and are not necessarily all the transmission terminals 20 included in the measurement system 100a. It is only necessary for the collecting apparatus 30 to determine the necessary transmission terminals 20 on the basis of identification information of a plurality of transmission terminals 20 set in advance by a user or the like. Each transmission terminal 20 restarts the AE measurement on the basis of the synchronization signal transmitted from the collecting apparatus 30. For example, each transmission terminal 20 restarts the AE measurement on the basis of the timing at which the synchronization signal transmitted from the collecting apparatus 30 is received or a clock time indicated by clock time information included in the synchronization signal. It is possible to synchronize the vehicles to be counted between the transmission terminals 20 and to perform efficient measurement through such control. The timing at which the transmission terminals 20-1 and 20-2 transmit the memory empty signals may not be only the timing at which the transmission buffer memories become empty but also the timing at which the number of memories becomes less than a predetermined number of memories.

It is possible for the transmission terminals 20-1 and 20-2 not only provide a notification to the collecting apparatus 30 at the timing at which the memory empty signals are generated but also to enable detection of the transmission terminals 20 needed at the time of transmission of the synchronization signal by applying memory counts to the memory empty signals and making determination by the collecting apparatus 30. Also, managing the position information of each sensor terminal through collection to optimize the transmission timing of the synchronization signal is also conceivable depending on the number and the arrangement of the sensor terminals.

In this manner, the collecting apparatus 30 according to the second embodiment includes a signal generator that generates the synchronization signal on the basis of the memory empty signal received from each transmission terminal 20 and a communicator that performs wireless communication with each transmission terminal 20.

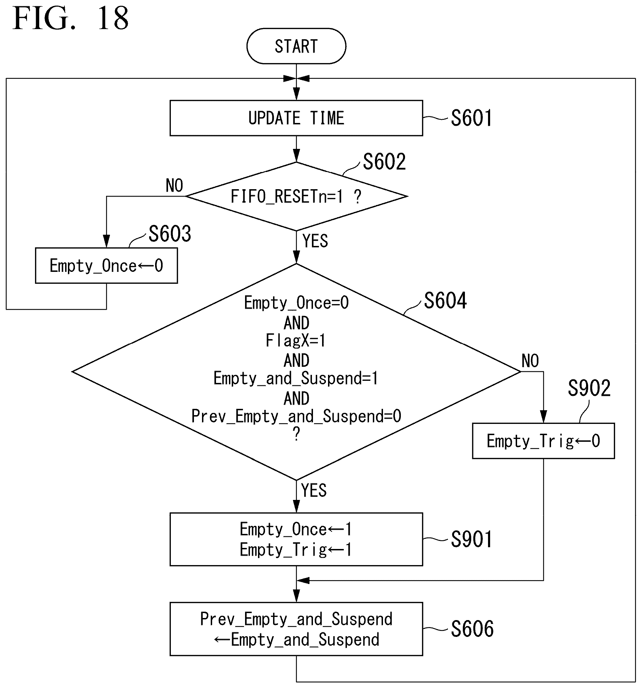

FIG. 18 is a flowchart illustrating a flow of processing related to FlagX that the signal processor 27 has according to the second embodiment. The processing in FIG. 18 is executed every time a clock is input by an FPGA or the like constituting the transmission terminal 20. In FIG. 18, processing similar to that in FIG. 10 will be denoted by reference signs similar to those in FIG. 10, and description thereof will be omitted.

In a case where the signal processor 27 determines that the value of Empty _Once is "0", the value of FlagX is "1", the value of Empty _and_Suspend is "1", and the value of Prev Empty_and_Suspend is "0" in the processing in Step S604 (Step S604-YES), the signal processor 27 sets the value of Empty_Once to "1" and sets the value of Empty_Trig to "1" (Step S901). The transmission terminals 20 transmit the memory empty signals to the collecting apparatus 30 at the timing at which the value of Empty _Trig becomes "1". Thereafter, the signal processor 27 updates the value of Prev_Empty_and_Suspend with the value of Empty_and_Suspend (Step S606). Thereafter, the processing in Step S601 is executed.

In a case where the signal processor 27 determines that the value of Empty _Once is "0", the value of FlagX is "1", the value of Empty _and_Suspend is "1", and the value of Prev Empty_and_Suspend is not "0" in the processing in Step S604 (Step S604-NO), the signal processor 27 sets the value of Empty_Trig to "0" (Step S902). Thereafter, the signal processor 27 updates the value of Prev_Empty_and_Suspend with the value of Empty_and_Suspend (Step S606). Thereafter, the processing in Step S601 is executed.

The collecting apparatus 30 receives the memory empty signal from each transmission terminal 20 and generates a synchronization signal in a case where the memory empty signals have been able to be received from all the necessary transmission terminals 20. The collecting apparatus 30 transmits the generated synchronization signal to each transmission terminal 20. The transmission terminals 20 generate a signal as Wireless_Flagn = 0 only once when the transmission terminals 20 receive the synchronization signal from the collecting apparatus 30, and generates a release signal in a state where all flags have become zero. In other words, FIFO_RESETn is generated as represented by Expression 3 by adding the Wireless_Flagn signal. In this manner, FIFO RESETn becomes zero, and the release signal is generated. FIFO RESETn <- (NOT Empty_and _Suspend) OR (NOT Empty_Once) OR (NOT FlagU) OR Wireless _Flagn...Expression 3

In a case where the value of Empty _and_Suspend is "1", the value of Empty _Once is "1", the value of FlagU is "1", and the value of Wireless_Flagn is "0" in Expression 3, FIFO RESETn becomes zero, and the release signal is generated.

In the second embodiment, the number of detected events and a timing differ for each transmission terminal 20 depending on the positions where the sensors 10 are installed and setting for event extraction. Therefore, a case where only a small number of events have occurred and the memory empty signal is thus not generated in a certain transmission terminal 20 is conceivable. Thus, any processing out of the following (countermeasure 1) to (countermeasure 3) may be performed.

### (Countermeasure 1)

In a case where wireless communication has not been received in a specific period of time (threshold value A) after previous release, the collecting apparatus 30 virtually generates a memory empty signal even in a case where there is no memory empty signal. In other words, in a case where there is a transmission terminal 20 as a target from which the memory empty signal has not been able to be received in the specific period of time (threshold value A) with reference to a timing at which the synchronization signal is transmitted, the collecting apparatus 30 performs processing on the assumption that the memory empty signal has been received from the transmission terminal 20 as the target from which the memory empty signal has not been able to be received in the specific period of time (threshold value A). The transmission terminal 20 as the target from which the memory empty signal has not been able to be received is a transmission terminal 20 from which the memory empty signal has not been transmitted or the transmission terminal 20 from which the memory empty signal has been transmitted though the collecting apparatus 30 has not been able to receive the memory empty signal. The collecting apparatus 30 transmits the synchronization signal to one or more transmission terminals 20 that are transmission sources of the memory empty signals and the transmission terminals 20 from which the memory empty signals have not been obtained. In this manner, it is possible to prevent the entire measurement from being stopped by the transmission terminals 20 with low sensitivity.

Note that in the case of this configuration, it is necessary to forcibly stop the AE measurement of the transmission terminals 20 as the targets from which the memory empty signals have not been able to be received. Therefore, the collecting apparatus 30 generates a forced stop signal to stop the operations of the corresponding transmission terminals 20 and transmit the generated forced stop signal to the corresponding transmission terminals 20. The forced stop signal is a signal to stop operations such as AE measurement performed by the transmission terminal 20. The transmission terminals 20 generate a stop signal when the transmission terminals 20 receive the forced stop signal.

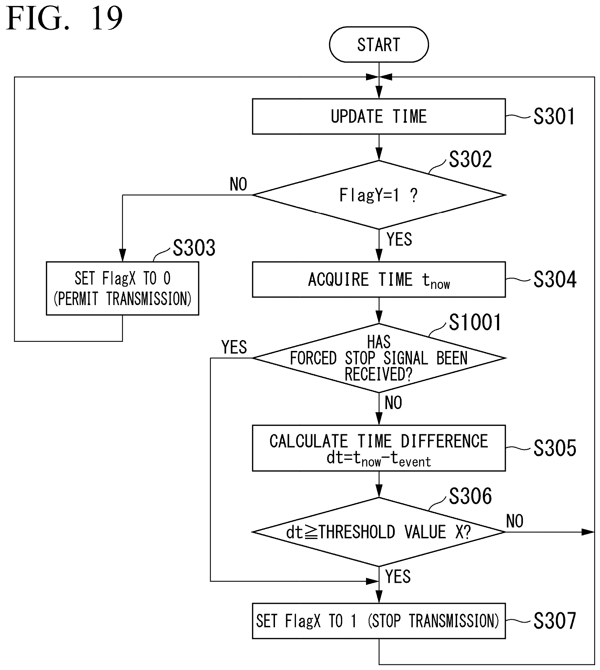

FIG. 19 is a flowchart illustrating a flow of processing related to FlagX that the signal processor 27 has according to the second embodiment. The processing in FIG. 19 is executed every time a clock is input by an FPGA or the like constituting each transmission terminal 20. In FIG. 19, processing similar to that in FIG. 7 will be denoted by reference signs similar to those in FIG. 7, and description thereof will be omitted.

After the processing in Step S304, the signal processor 27 determines whether or not the forced stop signal has been received (Step S1001). In a case where the signal processor 27 determines that the forced stop signal has been received (Step S1001-YES), the signal processor 27 executes the processing in Step S307. In other words, the signal processor 27 sets the value of FlagX to "1" in a case where the forced stop signal is received via the communicator 28 (Step S307). In this manner, the signal processor 27 generates a stop signal and moves on to a stopped state on the basis of the generated stop signal. Thereafter, the processing in Step S301 is executed.

On the other hand, in a case where the signal processor 27 determines that the forced stop signal has not been received (Step S1001-NO), the signal processor 27 executes the processing in and after Step S305.

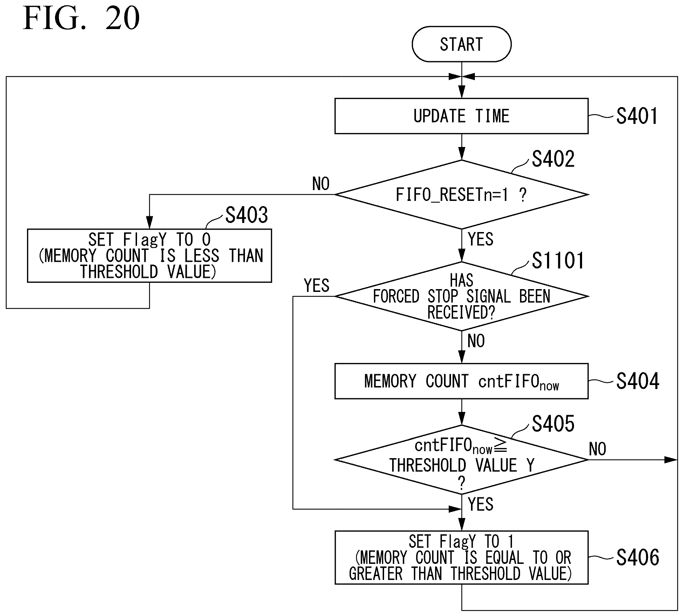

FIG. 20 is a flowchart illustrating a flow of processing related to FlagY that the signal processor 27 has according to the second embodiment. The processing in FIG. 20 is executed every time a clock is input by an FPGA or the like constituting each transmission terminal 20. In FIG. 20, processing similar to that in FIG. 8 will be denoted by reference signs similar to those in FIG. 8, and description thereof will be omitted.

In a case where the signal processor 27 determines that the value of FIFO RESETn is "1" in the processing in Step S402 (Step S402-YES), the signal processor 27 determines whether or not the forced stop signal has been received (Step S1101). In a case where the signal processor 27 determines that the forced stop signal has been received (Step S1101-YES), the signal processor 27 executes the processing in Step S406. In other words, the signal processor 27 sets the value of FlagY to "1" in a case where the forced stop signal has been received from the communicator 28 (Step S406).

On the other hand, in a case where the signal processor 27 determines that the forced stop signal has not been received (Step S1101-NO), the signal processor 27 executes the processing in and after Step S404.

### (Countermeasure 2)

The transmission terminals 20 notify the collecting apparatus 30 of state information indicating states (for example, conditions, measurement conditions, buffer amounts, and the like of the transmission terminals 20) indicating states of the transmission terminals 20 themselves at timings of starting and ending the measurement, after elapse of a specific period from the start of the measurement, or after elapse of a specific period from the end of the measurement. Also, the transmission terminals 20 set a certain threshold value and provide the notification of the situation in a case where the amounts of memories of the transmission buffers reach (become less than) the set threshold value. The collecting apparatus 30 generates the synchronization signal or the like on the basis of the state information received from each transmission terminal 20.

### (Countermeasure 3)

The collecting apparatus 30 transmits an Ack request to the transmission terminal 20 after elapse of a specific period or at an appropriate timing. The Ack request is a signal to request transmission of state information from the transmission terminals 20. Once the Ack request is received, the transmission terminals 20 transmit the state information to the collecting apparatus 30. The collecting apparatus 30 generates the synchronization signal or the like on the basis of the state information which is a response to the Ack request received from each transmission terminal 20.

According to the second embodiment configured as described above, the plurality of transmission terminals 20 transmit the memory empty signals to the collecting apparatus 30 in a case where the numbers of items of data saved on the transmission buffer memories are less than the threshold value W and start measurement of elastic waves after the synchronization signal transmitted from the collecting apparatus 30 is received, and the collecting apparatus 30 generates the synchronization signal in a case where the memory empty signals have been obtained from a predetermined number of transmission terminals 20 from among the plurality of transmission terminals 20, and transmit the generated synchronization signal to the predetermined number of transmission terminals 20. In this manner, it is possible to synchronize the timing at which the measurement is started among the plurality of transmission terminals 20 that are required to measure the elastic waves caused by the same vehicle.

### (First modification example)

In the aforementioned embodiment, the AE measurement may be started in an incomplete manner, in a case where the timing at which the transmission terminals 20 are brought into the released state from the stopped state with the release signal is the timing at which the vehicle is passing. Therefore, the timing at which the processing is started in the transmission terminals 20 may be delayed. In this case, the timing at which wireless communication can be transmitted may be different from the timing at which it is desired to start the measurement. Thus, the collecting apparatus 30 may apply clock information to the synchronization signal, and the transmission terminals 20 may perform the processing on the assumption that a processing condition is satisfied after elapse of the clock time after receiving the synchronization signal.

### (Second Modification Example)

In the aforementioned embodiment, measurement (saving) timings may deviate among the transmission terminals 20 in a case where the timing at which the transmission terminals 20 are brought into the released state from the stopped state with the release signal is the timing at which the vehicle is passing. Thus, the transmission terminals 20 may start the measurement from the next vehicle group in a case where an elastic wave group is occurring at the timing when the release signal is received. The transmission terminals 20 acquire information regarding the current clock time information t_{now} and continuously calculate the time difference dt between the acquired current clock time t_{now} and the finally occurring event detection clock time tₑᵥₑₙₜ. The transmission terminals 20 starts the measurement in a case where the time difference dt exceeds the threshold value U at the timing at which the synchronization signal is received or in a case where the time difference dt exceeds the threshold value U after the synchronization signal is received.

### (Third modification example)

The processing according to the first modification example of the first embodiment is designated by the collecting apparatus 30. The collecting apparatus 30 transmits the release signal by including the number N of counted vehicles therein. The transmission terminals 20 generate a stop signal after the number M of counted vehicles.

### (Fourth modification example)

Efficiency may be rather improved by adapting threshold values to an environment and the like depending on transportation conditions, the number of occurring AEs, or noise conditions. For example, the threshold value X may be determined by the transmission terminals 20 on the basis of the inter-vehicle distance and the vehicle speed, or the collecting apparatus 30 may transmit a threshold value to the transmission terminals 20, and the transmission terminals 20 may correct the threshold value X on the basis of the received threshold value. Note that the threshold values are not limited to the threshold value X and all the threshold values described in the aforementioned embodiment are the targets. In other words, it is possible to correct all the threshold values described in the aforementioned embodiment.

### (Fifth modification example)

The (countermeasure 1) and the (countermeasure 2) may be executed in combination. In a case where a certain sensor 10 recognizes a vehicle and ends measurement, another sensor 10 should also end the measurement substantially at the same clock time. Thus, in a case where a clock time TT elapses from the timing at which the memory empty signal is received from the certain transmission terminal 20, the collecting apparatus 30 transmits a forced stop signal to the other transmission terminal 20. The clock time TT is a number defined by the maximum sensor distance and the speed of the passing vehicle, for example.

### (Sixth modification example)

At least one transmission terminal 20 from among the plurality of transmission terminals 20 may execute the processing according to the first embodiment, and the other transmission terminal 20 may match the timing. The timing of the release signal may overlap the timing of passing of a vehicle, or the stop signal may not work properly depending on the positions of the sensors of the plurality of terminals or depending on sensors with different sensitivity. Thus, the measurement (saving) is performed at the same timing by one or more transmission terminals 20 determining the timing of the measurement (saving) and sharing the measurement timing with the other transmission terminals 20. The collecting device 30 transmits the synchronization signal to the plurality of transmission terminals 20, and the plurality of transmission terminals 20 generate the release signal and start the measurement (saving). In a case where a certain transmission device 20-1 generates the stop signal, the transmission terminal 20-1 notifies the collecting apparatus 30 of the fact that the stop signal has been generated. The collecting apparatus 30 transmits the forced stop signal to the other transmission terminals 20 to match the stop of the measurement (saving) in the transmission terminal 20-1. In this manner, the timing is matched with the measurement in the transmission terminal 20-1 in a case where the number of elastic waves is extremely small or large or in a case where it is desired to synchronize the plurality of transmission terminals 20 in measurement of different structures. The forced signal may not be generated only by the transmission terminal 20-1 and may be generated by a plurality of transmission terminals 20 in combination. Also, in a case where the timing is determined by an upstream transmission terminal 20, for example, a stop start clock time obtained by taking the distance between the sensors into consideration may be adopted after the release signal until the actual stop.

### (Seventh modification example)

In a case where the transmission terminals 20 generate the release signal during passing of a vehicle, the measurement timings from other transmission terminals 20 may deviate. Thus, the transmission terminals 20 transmit the transmission data saved in the transmission buffer memories and then release the measurement at a timing at which no vehicles are passing. The one or more transmission terminals 20 move on to the stopped state with the stop signal, acquire the information regarding the current clock time t_{now}, and continuously calculate the time difference dt between the acquired current clock time t_{now} and the finally occurring event detection clock time tₑᵥₑₙₜ. The transmission terminals 20 notify the collecting apparatus 30 of the fact that the vehicle has passed after the stop of the measurement in a case where the time difference dt exceeds the threshold value U. The collecting apparatus 30 transmits the synchronization signal immediately after the receptions of the notification from the plurality of transmission terminals 20.

### (Third embodiment)

In a third embodiment, a configuration in which vehicle detection sensors are installed in a structure, for example, to address noise or the like occurring singly and transmission terminals are triggered to start measurement with a vehicle detection signal from the vehicle detection sensors will be described.

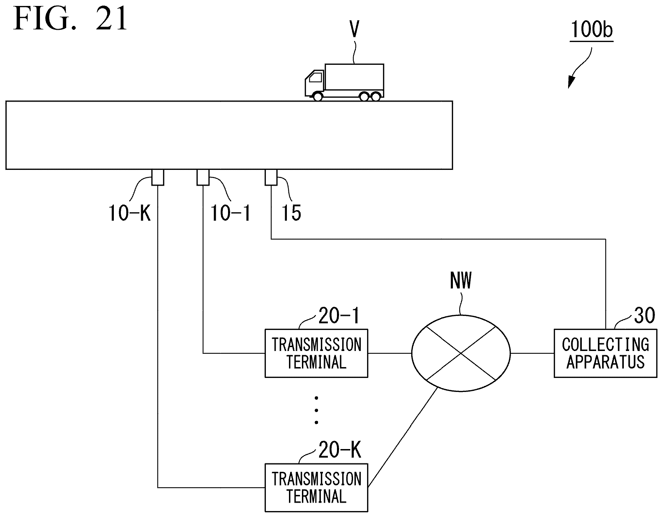

FIG. 21 is a diagram illustrating a system configuration of a measurement system 100b according to the third embodiment. The measurement system 100b includes K sensors 10, one or more vehicle detection sensors 15, K transmission terminals 20, and a collecting apparatus 30. The K sensors 10 and the K transmission terminals 20 are connected in a wired manner. For example, wired connection is established between a sensor 10-1 and a transmission terminal 20-1, between a sensor 10-K and a transmission terminal 20-K, between the vehicle detection sensor 15 and the transmission terminal 20-1, and between the vehicle detection sensor 15 and the transmission terminal 20-K. The K transmission terminals 20 and the collecting apparatus 30 are wirelessly connected via a network NW.

The vehicle detection sensor 15 is a device capable of detecting vehicles, such as a camera, a magnetic sensor, an acceleration sensor, or a strain sensor, for example. In a case where the vehicle detection sensor 15 detects a vehicle, the vehicle detection sensor 15 transmits a notification indicating that the vehicle has been detected to the collecting apparatus 30. The vehicle detection sensor 15 detects that the vehicle V has passed on the side further upstream than the sensors 10 as illustrated in FIG. 21, for example.

The collecting apparatus 30 transmits a synchronization signal in consideration of a state of a transmission buffer memory of each transmission terminal 20 in response to the notification from the vehicle detection sensor 15.

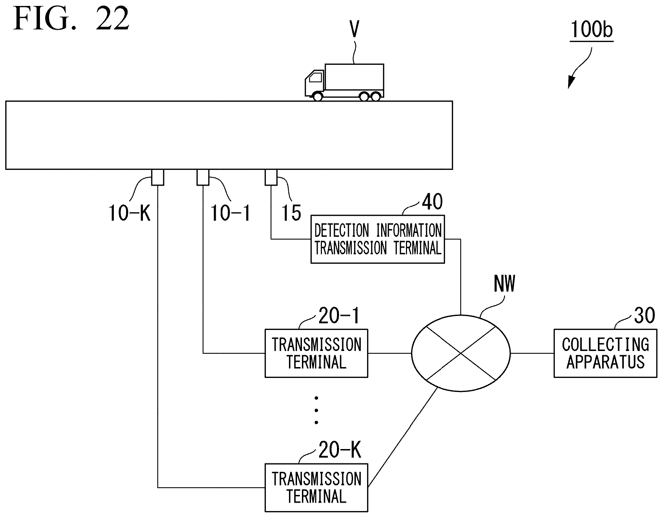

Although as the configuration of the measurement system 100b illustrated in FIG. 21, a configuration in which the vehicle detection sensor 15 transmits the notification indicating that the vehicle has been detected directly to the collecting apparatus 30 is illustrated, the measurement system 100b may have a configuration illustrated in FIG. 22. FIG. 22 is a diagram illustrating another system configuration of the measurement system 100b according to the third embodiment. The measurement system 100b illustrated in FIG. 22 further includes a detection information transmission terminal 40. The detection information transmission terminal 40 receives the notification which has been transmitted from the vehicle detection sensor 15 and indicates that the vehicle has been detected. The detection information transmission terminal 40 is a terminal that transmits the received notification to the collecting apparatus 30. Note that the detection information transmission terminal 40 may transmit the received notification as it is (as it is without processing original data output from the vehicle detection sensor 15, for example) to the collecting apparatus 30 via the network NW or may process the received notification as vehicle detection information obtained from the vehicle detection sensor 15 and then transmit the vehicle detection information to the collecting apparatus 30 via the network NW. In the case where the received notification is processed as the vehicle detection information, the detection information transmission terminal 40 transmits, to the collecting apparatus 30, results of performing filtering processing or analysis on the original data output from the vehicle detection sensor 15. In a case where the original data is transmitted from the detection information transmission terminal 40, the collecting apparatus 30 analyzes the original data and detects the vehicle.

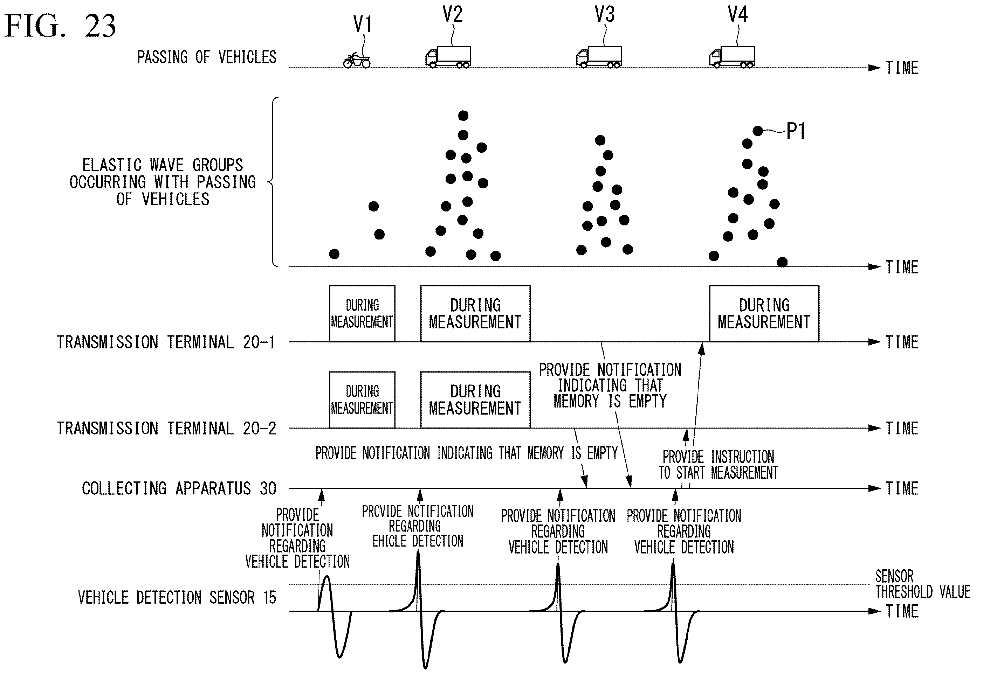

FIG. 23 is a diagram for explaining an overview of a control method related to AE measurement according to the third embodiment. As illustrated in FIG. 23, the vehicle detection sensor 15 detects vehicles and notifies the collecting apparatus 30 of information regarding the detection of the vehicles every time vehicles V1, V2, and V3 pass. However, the collecting apparatus 30 does not receive a memory empty signal from each transmission terminal 20 at the timing at which the vehicles V1, V2, and V3 are detected. Therefore, the collecting apparatus 30 does not generate a synchronization signal.

On the other hand, the collecting apparatus 30 has received the memory empty signal from each transmission terminal 20 at the timing at which the vehicle V4 is detected. Thus, the collecting apparatus 30 generates the synchronization signal and transmits the synchronization signal to each transmission terminal 20. Thereafter, each transmission terminal 20 restarts the measurement on the basis of the synchronization signal.

According to the third embodiment configured as described above, it is possible to reduce noise in soundness evaluation by performing measurement only with signals that surely indicates that a vehicle is passing. Also, it is possible for the terminals to move on to a standby state (including analog and edge processing) after wireless transmission, and it is also possible to reduce power consumption.

### (Modification examples)

Although the configuration in which the measurement system 100b includes one vehicle detection sensor 15 has been described in the aforementioned embodiment, the measurement system 100b may include a plurality of vehicle detection sensors 15. In a case where the measurement system 100b includes two vehicle detection sensors 15, for example, one vehicle detection sensor 15 may be installed on the side further upstream than the sensors 10, and the other vehicle detection sensor 15 may be installed on the side further downstream than the sensors 10. Here, the vehicle detection sensor 15 installed on the upstream side will be described as an upstream-side vehicle detection sensor, and the vehicle detection sensor 15 installed on the downstream side will be described as a downstream-side vehicle detection sensor.

In this manner, in a case where the upstream-side vehicle detection sensor detects a vehicle, the collecting apparatus 30 notifies the plurality of transmission terminals 20 of the start of the measurement, and the plurality of transmission terminals 20 start wireless transmission in response to detection of a vehicle by the downstream-side vehicle detection sensor, to thereby improve efficiency of the wireless band. In this case, if the downstream-side vehicle detection sensor does not detect a vehicle even after elapse of a time determined by a vehicle speed and a distance between the vehicle detection sensors (the distance between the upstream-side vehicle detection sensor and the downstream-side vehicle detection sensor) from the detection of a vehicle by the upstream-side vehicle detection sensor, the collecting apparatus 30 may send a request for clearing the transmission buffer memories to the plurality of transmission terminals 20 and prepare for the next measurement.

### (First modification example common to first embodiment to third embodiment)

Although the configuration in which the signal processor 27 includes the transmission buffer memory has been described in each of the aforementioned embodiments, the transmission buffer memory may be included in the communicator 28. In a case of such a configuration, it is only necessary for the signal processor 27 to refer to the transmission buffer memory included in the communicator 28 and perform the processing.

According to at least one of the embodiments described above, it is possible to improve transmission efficiency of data needed to evaluate a structure by the transmission terminal 20 including the receiver 21 that receives elastic waves output from the sensor 10 configured to detect the elastic waves generated inside the structure, the communicator 28 that wirelessly transmits transmission data saved in the transmission buffer memory configured to save the transmission data based on the received elastic waves, and the signal processor 27 that controls elastic wave measurement processing on the basis of the number of items of data saved in the transmission buffer memory and an elapse time from the clock time at which the elastic waves have been finally detected.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Clauses

1. A transmission terminal comprising:
   a receiver configured to receive elastic waves output from a sensor configured to detect the elastic waves generated inside a structure;
   a communicator configured to wirelessly transmit transmission data saved in a transmission buffer memory configured to save transmission data based on the received elastic waves; and
   a signal processor configured to control elastic wave measurement processing on the basis of the number of items of data saved on the transmission buffer memory and an elapse time from a clock time at which the elastic waves have been detected.
2. The transmission terminal according to clause 1, wherein the signal processor controls, as the elastic wave measurement processing, any of elastic wave measurement, transmission by the communicator, and saving in transmission data in the transmission buffer memory.
3. The transmission terminal according to clause 2, wherein the signal processor stops the elastic wave measurement or the saving in the transmission data in the transmission buffer memory and causes the communicator to perform transmission in a case where the elapse time exceeds a first threshold value and the number of items of data saved in the transmission buffer memory is equal to or greater than a second threshold value.
4. The transmission terminal according to clause 3, wherein the signal processor releases the stop of the elastic wave measurement and the saving in the transmission data in the transmission buffer memory in a case where the elapse time exceeds a third threshold value and the number of items of data saved in the transmission buffer memory is less than a fourth threshold value.
5. The transmission terminal according to any one of clauses 1 to 4, wherein the signal processor counts the number of vehicles on the basis of the received elastic waves and controls the elastic wave measurement processing in a case where the counted number of vehicles has reached a predetermined number of vehicles.
6. The transmission terminal according to clause 5, wherein the signal processor resets the counting of the number of vehicles after controlling the elastic wave measurement processing, counts the number of vehicles at a timing at which the elapse time exceeds a fifth threshold value, and does not count the number of vehicles during a time when the elapse time exceeds the fifth threshold value.
7. The transmission terminal according to clause 6, wherein the signal processor does not count the number of vehicles in a case where the number of elastic waves generated during the period when the elapse time exceeds the fifth threshold value are less than a sixth threshold value.
8. The transmission terminal according to any one of clauses 1 to 4, wherein the signal processor measures a plurality of vehicles using a seventh threshold value that is greater than a first threshold value and is defined by a vehicle speed and a designated maximum inter-vehicle distance.
9. A measurement system comprising:
   the plurality of transmission terminals according to clause 1; and
   a collecting apparatus configured to collect transmission data transmitted from the plurality of transmission terminals,
   wherein the plurality of transmission terminals
      transmit, to the collecting apparatus, a memory signal indicating that a capacity of the transmission buffer memory is empty in a case where the number of items of data saved in the transmission buffer memory is less than a fourth threshold value, and
      start measurement of elastic waves after receiving a synchronization signal transmitted from the collecting apparatus, and
   the collecting apparatus generates the synchronization signal in a case where the memory signal is obtained from a predetermined number of transmission terminals from among the plurality of transmission terminals and transmits the generated synchronization signal to the predetermined number of transmission terminals.
10. The measurement system according to clause 9, further comprising:
   one or more vehicle detection sensors configured to detect passing of vehicles,
   wherein the collecting apparatus generates the synchronization signal in a case where the memory signal has been obtained from the predetermined number of transmission terminals before a timing at which the one or more vehicle detection sensors detect vehicles.
11. The measurement system according to clause 9, wherein the collecting apparatus transmits the synchronization signal to one or more transmission terminals that are transmission sources of the memory signal and transmission terminals from which the memory signal has not been obtained in a case where the memory signal has not been obtained from some of the transmission terminals during a predefined period in a period during which measurement is performed in the plurality of transmission terminals.
12. The measurement system according to clause 10,
   wherein the collecting apparatus transmits a forced stop signal to forcibly stop the elastic wave measurement processing of the transmission terminals, from which the memory signal has not been obtained, to the transmission terminals, from which the memory signal has not been obtained, and
   any of the plurality of transmission terminals stops measurement of elastic waves in a case where the forced stop signal has been received.
13. The measurement system according to clause 9,
   wherein the plurality of transmission terminals transmit state information indicating states of the transmission terminals themselves to the collecting apparatus at a predetermined timing or transmit the state information to the collecting apparatus in response to a request for transmitting the state information from the collecting apparatus, and
   the collecting apparatus transmits the synchronization signal on the basis of the state information transmitted from the plurality of transmission terminals.
14. The measurement system according to clause 9, wherein the plurality of transmission terminals start measurement in a case where a time difference between a current clock time and a clock time of last detection of elastic waves exceeds an eighth threshold value at a timing at which the synchronization signal is received or in a case where the time difference exceeds the eighth threshold value after the synchronization signal is received.
15. A control method comprising:
   receiving elastic waves output from a sensor configured to detect the elastic waves generated inside a structure;
   wirelessly transmitting transmission data saved in a transmission buffer memory configured to save transmission data based on the received elastic waves; and
   controlling elastic wave measurement processing on the basis of the number of items of data saved in the transmission buffer memory and an elapse time from a clock time at which the elastic waves have been detected.

## Claims

1. A transmission terminal (20, 20-1 to 20-k) comprising:
a receiver (21) configured to receive elastic waves output from a sensor configured to detect the elastic waves generated inside a structure;
a communicator (28) configured to wirelessly transmit transmission data saved in a transmission buffer memory configured to save transmission data based on the received elastic waves; and
a signal processor (27) configured to control elastic wave measurement processing on the basis of the number of items of data saved on the transmission buffer memory and an elapse time from a clock time at which the elastic waves have been detected.

2. The transmission terminal (20, 20-1 to 20-k) according to claim 1, wherein the signal processor (27) controls, as the elastic wave measurement processing, any of elastic wave measurement, transmission by the communicator (28), and saving in transmission data in the transmission buffer memory.

3. The transmission terminal (20, 20-1 to 20-k) according to claim 2, wherein the signal processor (27) stops the elastic wave measurement or the saving in the transmission data in the transmission buffer memory and causes the communicator (28) to perform transmission in a case where the elapse time exceeds a first threshold value and the number of items of data saved in the transmission buffer memory is equal to or greater than a second threshold value.

4. The transmission terminal (20, 20-1 to 20-k) according to claim 3, wherein the signal processor (27) releases the stop of the elastic wave measurement and the saving in the transmission data in the transmission buffer memory in a case where the elapse time exceeds a third threshold value and the number of items of data saved in the transmission buffer memory is less than a fourth threshold value.

5. The transmission terminal (20, 20-1 to 20-k) according to any one of claims 1 to 4, wherein the signal processor (27) counts the number of vehicles on the basis of the received elastic waves and controls the elastic wave measurement processing in a case where the counted number of vehicles has reached a predetermined number of vehicles.

6. The transmission terminal (20, 20-1 to 20-k) according to claim 5, wherein the signal processor (27) resets the counting of the number of vehicles after controlling the elastic wave measurement processing, counts the number of vehicles at a timing at which the elapse time exceeds a fifth threshold value, and does not count the number of vehicles during a time when the elapse time exceeds the fifth threshold value.

7. The transmission terminal (20, 20-1 to 20-k) according to claim 6, wherein the signal processor (27) does not count the number of vehicles in a case where the number of elastic waves generated during the period when the elapse time exceeds the fifth threshold value are less than a sixth threshold value.

8. The transmission terminal (20, 20-1 to 20-k) according to any one of claims 1 to 4, wherein the signal processor (27) measures a plurality of vehicles using a seventh threshold value that is greater than a first threshold value and is defined by a vehicle speed and a designated maximum inter-vehicle distance.

9. A measurement system (100, 100a) comprising:
a plurality of transmission terminals (20-1 to 20-k) according to claim 1; and
a collecting apparatus (30) configured to collect transmission data transmitted from the plurality of transmission terminals(20-1 to 20-k),
wherein the plurality of transmission terminals (20-1 to 20-k)
transmit, to the collecting apparatus(30), a memory signal indicating that a capacity of the transmission buffer memory is empty in a case where the number of items of data saved in the transmission buffer memory is less than a fourth threshold value, and
start measurement of elastic waves after receiving a synchronization signal transmitted from the collecting apparatus(30), and
the collecting apparatus (30) generates the synchronization signal in a case where the memory signal is obtained from a predetermined number of transmission terminals from among the plurality of transmission terminals (20-1 to 20-k) and transmits the generated synchronization signal to the predetermined number of transmission terminals.

10. The measurement system (100, 100a) according to claim 9, further comprising:
one or more vehicle detection sensors (15) configured to detect passing of vehicles,
wherein the collecting apparatus (30) generates the synchronization signal in a case where the memory signal has been obtained from the predetermined number of transmission terminals before a timing at which the one or more vehicle detection sensors detect vehicles.

11. The measurement system (100, 100a) according to claim 9, wherein the collecting apparatus (30) transmits the synchronization signal to one or more transmission terminals that are transmission sources of the memory signal and transmission terminals from which the memory signal has not been obtained in a case where the memory signal has not been obtained from some of the transmission terminals during a predefined period in a period during which measurement is performed in the plurality of transmission terminals (20-1 to 20-k).

12. The measurement system (100, 100a) according to claim 10,
wherein the collecting apparatus (30) transmits a forced stop signal to forcibly stop the elastic wave measurement processing of the transmission terminals, from which the memory signal has not been obtained, to the transmission terminals, from which the memory signal has not been obtained, and
any of the plurality of transmission terminals (20-1 to 20-k) stops measurement of elastic waves in a case where the forced stop signal has been received.

13. The measurement system (100, 100a) according to claim 9,
wherein the plurality of transmission terminals (20-1 to 20-k) transmit state information indicating states of the transmission terminals themselves to the collecting apparatus (30) at a predetermined timing or transmit the state information to the collecting apparatus (30) in response to a request for transmitting the state information from the collecting apparatus(30), and
the collecting apparatus (30) transmits the synchronization signal on the basis of the state information transmitted from the plurality of transmission terminals (20-1 to 20-k).

14. The measurement system (100, 100a) according to claim 9, wherein the plurality of transmission terminals (20-1 to 20-k) start measurement in a case where a time difference between a current clock time and a clock time of last detection of elastic waves exceeds an eighth threshold value at a timing at which the synchronization signal is received or in a case where the time difference exceeds the eighth threshold value after the synchronization signal is received.

15. A control method comprising:
receiving (S101, S701) elastic waves output from a sensor configured to detect the elastic waves generated inside a structure;
wirelessly transmitting (S202) transmission data saved in a transmission buffer memory configured to save transmission data based on the received elastic waves; and
controlling (S103, S706) elastic wave measurement processing on the basis of the number of items of data saved in the transmission buffer memory and an elapse time from a clock time at which the elastic waves have been detected.
